# EUROPEAN PATENT APPLICATION

(11) **EP 4 432 757 A1**
(43) Date of publication of application: **18.09.2024**
(21) Application number: 22913675.9
(22) Date of filing: 17.10.2022
(51) Int. Cl.: H04W 72/04

(54) **DATA TRANSMISSION METHOD AND COMMUNICATION APPARATUS**

(30) Priority: 29.12.2021 CN 202111643766
(71) Applicant: Huawei Technologies Co., Ltd., Shenzhen, Guangdong 518129 (CN)
(72) Inventor: SHI, Lingling, Shenzhen, Guangdong 518129 (CN); GU, Xueqin, Shenzhen, Guangdong 518129 (CN)
(74) Representative: Gill Jennings & Every LLP
(86) International application number: PCT/CN2022/125726
(87) International publication number: WO 2023/124411

(57) **Abstract**

This application discloses a data transmission method and a communication apparatus, to reduce a bandwidth requirement for data transmission through a fronthaul interface. A wireless device controller (or a wireless device) can separately encapsulate, into at least two packets, data carried by a plurality of types of physical channels in one time-domain unit, where data carried by at least one type of physical channel is encapsulated in each packet. Alternatively, the wireless device can encapsulate data corresponding to a plurality of physical antennas into at least two packets, where data corresponding to at least one physical antenna is encapsulated in each packet. Because a size of a packet transmitted between the wireless device controller and the wireless device is reduced, the bandwidth requirement for packet transmission through the fronthaul interface is reduced.

## Description

This application claims priority to Chinese Patent Application No. 202111643766.8, filed with the China National Intellectual Property Administration on December 29, 2021 and entitled "DATA TRANSMISSION METHOD AND COMMUNICATION APPARATUS", which is incorporated herein by reference in its entirety.

### TECHNICAL FIELD

Embodiments of this application relate to the communication field, and in particular, to a data transmission method and a communication apparatus.

### BACKGROUND

In fronthaul networking, a wireless device controller communicates with a wireless device through a fronthaul interface, and performs data transmission by using an Ethernet packet or an IP packet.

In a conventional technology, a wireless device controller or a wireless device performs fragmentation and packet assembly in a time division multiplexing manner. To be specific, all data in a time-domain unit is encapsulated into a packet for sending. However, if a bandwidth of a fronthaul interface is limited, or a processing capability of a transmit end (for example, the wireless device controller or the wireless device) of the fronthaul interface is limited, or a processing capability of a receive end (for example, the wireless device controller or the wireless device) of the fronthaul interface is limited, and a receiving/transmission delay is large, the foregoing packet may fail to be sent or may arrive at the receive end after a delay. Therefore, currently, a data transmission method that can reduce a bandwidth requirement of a fronthaul interface is urgently needed.

### SUMMARY

This application provides a data transmission method and a communication apparatus, to reduce a bandwidth requirement for data transmission through a fronthaul interface.

According to a first aspect, this application provides a data transmission method. The method is applied to a wireless device controller connected to a wireless device through a fronthaul interface. The wireless device controller obtains data carried by a plurality of types of physical channels in one time-domain unit. Then, the wireless device controller separately encapsulates, into at least two packets, the data carried by the plurality of types of physical channels, where data carried by at least one type of physical channel is encapsulated in each packet. Then, the wireless device controller sends the packet to a wireless device in the time-domain unit through a fronthaul interface.

In this embodiment, the wireless device controller can encapsulate data in one time-domain unit into at least two packets based on a dimension of a physical channel. Compared with the solution in which the data in the time-domain unit is encapsulated into one packet, a size of each packet is reduced. Therefore, a bandwidth required for transmitting each packet is also reduced. Therefore, a bandwidth requirement for packet transmission through the fronthaul interface is reduced.

In a possible implementation, data carried by different types of physical channels is encapsulated in different packets.

Specifically, if data carried by at least one type of physical channel in the time-domain unit is encapsulated in each packet, a channel that carries data encapsulated in one of the at least two packets is different from a channel that carries data encapsulated in the another packet. For example, the at least two packets include a first packet and a second packet. Data carried by a first physical channel in a first time-domain unit is encapsulated in the first packet, and data carried by a second physical channel in the first time-domain unit is encapsulated in the second packet, where the first physical channel and the second physical channel are channels of different types.

For example, the at least two packets include a first packet and a second packet, where data carried by a physical downlink control channel (physical downlink control channel, PDCCH) is encapsulated in the first packet, data carried by a physical downlink shared channel (physical downlink shared channel, PDSCH) is encapsulated in the second packet, and the PDCCH and the PDSCH are located in one time-domain unit.

In a possible implementation, data carried by one type of physical channel is encapsulated in at least one packet. Specifically, the wireless device controller may encapsulate, into only one packet, data carried by one type of physical channel in the time-domain unit, or may encapsulate a part of data of one type of physical channel in the time-domain unit into one packet, and encapsulate another part of data of the physical channel into another packet.

Generally, data carried by one type of physical channel is encapsulated into only one packet. However, in an actual application, if data carried by a type of physical channel is large (for example, the data carried by the physical channel is greater than one maximum transmission unit (maximum transmission unit, MTU)), the wireless device controller may also encapsulate, into a plurality of packets, the data carried by the type of physical channel. For example, if the first packet is entirely used to encapsulate data carried by a first channel, but a part of the data carried by the first channel is not encapsulated, the wireless device controller encapsulates, into the second packet, the part that is of the data carried by the first channel and that is not encapsulated. In this case, if a payload of the second packet is not full, data carried by another channel may be further encapsulated in the second packet.

In a possible implementation, each packet carries frequency domain position indication information, and the frequency domain position indication information indicates a frequency domain position of a physical channel that carries data in the packet.

For example, the frequency domain position indication information may be a number of a carrier, an index value of a resource block (resource block, RB), or an index value of a resource element (resource element, RE). This is not specifically limited herein.

Optionally, each packet further carries time domain position indication information, and the time domain position indication information indicates a time domain position of the foregoing time-domain unit, namely, a time domain position of one time-domain unit in which the plurality of physical channels are located. The time-domain unit is any one of a symbol, a slot, a subframe, or a transmission time interval (transmission time interval, TTI).

In the conventional technology, data carried by all physical channels in one time-domain unit is encapsulated in one packet. Therefore, a packet in the conventional technology carries only time domain position indication information, but does not carry frequency domain position indication information. Generally, a receive end (namely, a wireless device) needs to determine, based on a time-frequency domain position mapping rule and time domain position indication information that are pre-agreed on with a wireless device controller, specific types of physical channels that carry data encapsulated in each packet. However, in this application, because the wireless device controller encapsulates, into at least two packets, data carried by a plurality of types of physical channels in one time-domain unit, carrying frequency domain position indication information in each packet helps a receive end (namely, the wireless device) learn of a specific type of physical channel that carries data encapsulated in each packet.

In a possible implementation, the plurality of types of physical channels located in the one time-domain unit are N types of physical channels, and N is an integer greater than 1. That the wireless device controller separately encapsulates, into at least two packets, the data carried by the plurality of types of physical channels includes: The wireless device controller encapsulates, into N packets, the data carried by the N types of physical channels, where only data carried by one type of physical channel is encapsulated into each packet.

In a possible implementation, the plurality of types of physical channels located in the one time-domain unit are N types of physical channels, and N is an integer greater than 1. That the wireless device controller separately encapsulates, into at least two packets, the data carried by the plurality of types of physical channels includes: The wireless device controller encapsulates, into one packet, data carried by at least two types of physical channels in the N types of physical channels, to obtain M packets, where M is an integer greater than 1, and M is less than N.

In a possible implementation, the wireless device controller stores a first correspondence, the first correspondence is a correspondence between a physical channel and a priority, and the priority indicates a priority degree of sending, by the wireless device controller, a packet carrying data carried by the physical channel.

In a possible implementation, that the wireless device controller sends the packet to a wireless device in the time-domain unit through a fronthaul interface includes: The wireless device controller determines a priority of each packet based on a physical channel carrying data in each packet and the first correspondence. The wireless device controller sends at least one packet of the at least two packets to the wireless device in the time-domain unit based on the priority of each packet through the fronthaul interface.

For example, the foregoing at least two packets include a first packet and a second packet. If a priority of a channel in the first packet is higher than a priority of a channel in the second packet, the wireless device controller first sends the first packet, and then, sends the second packet.

In a possible implementation, the at least two packets include a first packet and a second packet, data carried by a physical downlink control channel PDCCH is encapsulated in the first packet, and data carried by a physical downlink shared channel PDSCH is encapsulated in the second packet. The physical downlink control channel PDCCH and the physical downlink shared channel PDSCH are located in one time-domain unit. A priority of the first packet is higher than a priority of the second packet. That the wireless device controller sends at least one packet of the at least two packets to the wireless device in the time-domain unit based on the priority of each packet through the fronthaul interface includes: The wireless device controller first sends the first packet in the time-domain unit through the fronthaul interface, and then, sends the second packet through the fronthaul interface.

In this implementation, it is proposed that the wireless device controller can determine a priority of a packet based on a physical channel, so that a packet with a higher priority is first sent based on the priority, and then, a packet with a lower priority is sent. This ensures that a high-priority packet can be sent to the wireless device as early as possible.

In a possible implementation, that the wireless device controller sends at least one packet of the at least two packets to the wireless device in the time-domain unit based on the priority of each packet through the fronthaul interface includes: The wireless device controller determines, based on the priority of each packet, a sequence of sending the at least two packets, where a sequence of sending a high-priority packet is prior to a sequence of sending a low-priority packet. The wireless device controller sends the at least two packets to the wireless device in the time-domain unit based on the sequence through the fronthaul interface.

In a possible implementation, that the wireless device controller sends at least one packet of the at least two packets to the wireless device in the time-domain unit based on the priority of each packet through the fronthaul interface includes: When a priority of the packet is higher than a preset priority, the wireless device controller sends the packet in the time-domain unit through the fronthaul interface. When a priority of the packet is lower than a preset priority, the wireless device controller temporarily stores or discards the packet.

In a possible implementation, the plurality of types of physical channels include at least two types of channels of a physical downlink shared channel PDSCH, a physical downlink control channel PDCCH, a physical broadcast channel (physical broadcast channel, PBCH), a physical multicast channel (physical multicast channel, PMCH), a physical control format indicator channel (physical control format indicator channel, PCFICH), and a physical hybrid automatic repeat request (hybrid automatic repeat request, HARQ) indicator channel (physical Hybrid ARQ indicator channel, PHICH).

In a possible implementation, the at least two packets include a third packet, and data carried by a physical downlink shared channel PDSCH and data carried by a physical downlink control channel PDCCH are encapsulated in the third packet.

In a possible implementation, each packet includes first indication information, and the first indication information indicates a priority of processing the packet. The first indication information indicates the priority of processing the packet, that is, indicates a priority of processing the packet by a transmission device like a router or a switch, so that the transmission device like the router or the switch preferentially processes a high-priority packet based on the priority, to ensure preferential transmission of the high-priority packet.

According to a second aspect, this application provides a wireless device controller. The wireless device controller is connected to a wireless device through a fronthaul interface. The wireless device controller includes an obtaining module, a packet encapsulating module, and a transmission module.

The obtaining module is configured to obtain data carried by each of a plurality of types of physical channels, where the plurality of types of physical channels are located in one time-domain unit.

The packet encapsulating module is configured to separately encapsulate, into at least two packets, data carried by the plurality of types of physical channels, where data carried by at least one type of physical channel is encapsulated in each packet.

The transmission module is configured to send the packet to the wireless device in the time-domain unit through the fronthaul interface.

In a possible implementation, data carried by different types of physical channels is encapsulated in different packets.

In a possible implementation, data carried by one type of physical channel is encapsulated in at least one packet.

In a possible implementation, each packet carries frequency domain position indication information, and the frequency domain position indication information indicates a frequency domain position of a physical channel that carries data in the packet.

In a possible implementation, the time-domain unit is any one of a symbol, a slot, a subframe, or a transmission time interval TTI.

In a possible implementation, the plurality of types of physical channels include at least two types of channels of a physical downlink shared channel PDSCH, a physical downlink control channel PDCCH, a physical broadcast channel PBCH, a physical multicast channel PMCH, a physical control format indicator channel PCFICH, and a physical HARQ indicator channel PHICH.

In a possible implementation, the plurality of types of physical channels located in the one time-domain unit are N types of physical channels, and N is an integer greater than 1. The packet encapsulating module is specifically configured to encapsulate, into N packets, the data carried by the N types of physical channels, where only data carried by one type of physical channel is encapsulated in each packet.

In a possible implementation, the plurality of types of physical channels located in the one time-domain unit are N types of physical channels, and N is an integer greater than 1. The packet encapsulating module is specifically configured to encapsulate, into one packet, data carried by at least two types of physical channels in the N types of physical channels, to obtain M packets, where M is an integer greater than 1, and M is less than N.

In a possible implementation, the wireless device controller stores a first correspondence, the first correspondence is a correspondence between a physical channel and a priority, and the priority indicates a priority degree of sending, by the wireless device controller, a packet carrying data carried by the physical channel.

In a possible implementation, the transmission module is specifically configured to: determine a priority of each packet based on a physical channel carrying data in each packet and the first correspondence, and send at least one packet of the at least two packets to the wireless device in the time-domain unit based on the priority of each packet through the fronthaul interface.

In a possible implementation, the transmission module is specifically configured to: determine, based on the priority of each packet, a sequence of sending the at least two packets, where a sequence of sending a high-priority packet is prior to a sequence of sending a low-priority packet; and send the at least two packets to the wireless device in the time-domain unit based on the sequence through the fronthaul interface.

In a possible implementation, the transmission module is specifically configured to:
when a priority of the packet is higher than a preset priority, send the packet in the time-domain unit through the fronthaul interface; or
when a priority of the packet is lower than a preset priority, temporarily store or discard the packet.

In a possible implementation, the at least two packets include a first packet and a second packet, data carried by a physical downlink control channel PDCCH is encapsulated in the first packet, and data carried by a physical downlink shared channel PDSCH is encapsulated in the second packet. The physical downlink control channel PDCCH and the physical downlink shared channel PDSCH are located in one time-domain unit. A priority of the first packet is higher than a priority of the second packet.

The transmission module is specifically configured to first send the first packet in the time-domain unit through the fronthaul interface, and then, send the second packet through the fronthaul interface.

In a possible implementation, the at least two packets include a third packet, and data carried by a physical downlink shared channel PDSCH and data carried by a physical downlink control channel PDCCH are encapsulated in the third packet.

In a possible implementation, each packet includes first indication information, and the first indication information indicates a priority of processing the packet.

It should be noted that there are a plurality of types of other implementations in embodiments of this application. For details, refer to the specific implementations of the first aspect and beneficial effects of the first aspect. Details are not described herein again.

According to a third aspect, this application provides another data transmission method. A wireless device obtains data carried by each of a plurality of types of physical channels, where the plurality of types of physical channels are located in one time-domain unit. Next, the wireless device separately encapsulates, into at least two packets, data carried by the plurality of types of physical channels, where data carried by at least one type of physical channel is encapsulated in each packet. Then, the wireless device sends the packet to a wireless device controller in the time-domain unit through a fronthaul interface.

In this embodiment, the wireless device can encapsulate data in one time-domain unit into at least two packets based on a dimension of a physical channel. Compared with the solution in which the data in the time-domain unit is encapsulated into one packet, a size of each packet is reduced. Therefore, a bandwidth required for transmitting each packet is also reduced. Therefore, a bandwidth requirement for packet transmission through the fronthaul interface is reduced.

In a possible implementation, data carried by different types of physical channels is encapsulated in different packets.

In a possible implementation, data carried by one type of physical channel is encapsulated in at least one packet.

In a possible implementation, each packet carries frequency domain position indication information, and the frequency domain position indication information indicates a frequency domain position of a physical channel that carries data in the packet.

In a possible implementation, the time-domain unit is any one of a symbol, a slot, a subframe, or a transmission time interval TTI.

In a possible implementation, the plurality of types of physical channels located in the one time-domain unit are N types of physical channels, and N is an integer greater than 1. That the wireless device separately encapsulates, into at least two packets, data carried by the plurality of types of physical channels includes: The wireless device encapsulates, into N packets, the data carried by the N types of physical channels, where only data carried by one type of physical channel is encapsulated in each packet.

In a possible implementation, the plurality of types of physical channels located in the one time-domain unit are N types of physical channels, and N is an integer greater than 1. That the wireless device separately encapsulates, into at least two packets, data carried by the plurality of types of physical channels includes: The wireless device encapsulates, into one packet, data carried by at least two types of physical channels in the N types of physical channels, to obtain M packets, where M is an integer greater than 1, and M is less than N.

In a possible implementation, the wireless device stores a second correspondence, the second correspondence is a correspondence between a physical channel and a priority, and the priority indicates a priority degree of sending, by the wireless device, a packet carrying data carried by the physical channel.

In a possible implementation, that the wireless device sends the packet to a wireless device controller in the time-domain unit through a fronthaul interface includes: The wireless device determines a priority of each packet based on a physical channel carrying data in each packet and the second correspondence. The wireless device sends at least one packet of the at least two packets to the wireless device controller in the time-domain unit based on the priority of each packet through the fronthaul interface.

In a possible implementation, that the wireless device sends at least one packet of the at least two packets to the wireless device controller in the time-domain unit based on the priority of each packet through the fronthaul interface includes: The wireless device determines, based on the priority of each packet, a sequence of sending the at least two packets, where a sequence of sending a high-priority packet is prior to a sequence of sending a low-priority packet. The wireless device sends the at least two packets to the wireless device controller in the time-domain unit based on the sequence through the fronthaul interface.

In a possible implementation, that the wireless device sends at least one packet of the at least two packets to the wireless device controller in the time-domain unit based on the priority of each packet through the fronthaul interface includes: When a priority of the packet is higher than a preset priority, the wireless device sends the packet in the time-domain unit through the fronthaul interface. When a priority of the packet is lower than a preset priority, the wireless device temporarily stores or discards the packet.

In a possible implementation, the plurality of types of physical channels include at least two types of channels of a physical uplink shared channel PUSCH, a physical uplink control channel PUCCH, and a physical random access channel PRACH.

In a possible implementation, each packet includes second indication information, and the second indication information indicates a priority of processing the packet.

It should be noted that there are a plurality of types of other implementations in embodiments of this application. For details, refer to the specific implementations of the first aspect and beneficial effects of the first aspect. Details are not described herein again.

According to a fourth aspect, this application provides a wireless device. The wireless device is connected to a wireless device controller through a fronthaul interface. The wireless device includes an obtaining module, a packet encapsulating module, and a transmission module.

The obtaining module is configured to obtain data carried by each of a plurality of types of physical channels, where the plurality of types of physical channels are located in one time-domain unit.

The packet encapsulating module is configured to separately encapsulate, into at least two packets, data carried by the plurality of types of physical channels, where data carried by at least one type of physical channel is encapsulated in each packet.

The transmission module is configured to send the packet to the wireless device in the time-domain unit through the fronthaul interface.

In a possible implementation, data carried by different types of physical channels is encapsulated in different packets.

In a possible implementation, data carried by one type of physical channel is encapsulated in at least one packet.

In a possible implementation, each packet carries frequency domain position indication information, and the frequency domain position indication information indicates a frequency domain position of a physical channel that carries data in the packet.

In a possible implementation, the time-domain unit is any one of a symbol, a slot, a subframe, or a transmission time interval TTI.

In a possible implementation, the plurality of types of physical channels include at least two types of channels of a physical uplink shared channel (physical uplink shared channel, PUSCH), a physical uplink control channel (physical uplink control channel, PUCCH), and a physical random access channel (physical random access channel, PRACH).

In a possible implementation, the plurality of types of physical channels located in the one time-domain unit are N types of physical channels, and N is an integer greater than 1. The packet encapsulating module is specifically configured to encapsulate, into N packets, the data carried by the N types of physical channels, where only data carried by one type of physical channel is encapsulated in each packet.

In a possible implementation, the plurality of types of physical channels located in the one time-domain unit are N types of physical channels, and N is an integer greater than 1. The packet encapsulating module is specifically configured to encapsulate, into one packet, data carried by at least two types of physical channels in the N types of physical channels, to obtain M packets, where M is an integer greater than 1, and M is less than N.

In a possible implementation, the wireless device stores a first correspondence, the first correspondence is a correspondence between a physical channel and a priority, and the priority indicates a priority degree of sending, by the wireless device, a packet carrying data carried by the physical channel.

In a possible implementation, the transmission module is specifically configured to: determine a priority of each packet based on a physical channel carrying data in each packet and the first correspondence, and send at least one packet of the at least two packets to the wireless device in the time-domain unit based on the priority of each packet through the fronthaul interface.

In a possible implementation, the transmission module is specifically configured to: determine, based on the priority of each packet, a sequence of sending the at least two packets, where a sequence of sending a high-priority packet is prior to a sequence of sending a low-priority packet; and send the at least two packets to the wireless device in the time-domain unit based on the sequence through the fronthaul interface.

In a possible implementation, the transmission module is specifically configured to:
when a priority of the packet is higher than a preset priority, send the packet in the time-domain unit through the fronthaul interface; or
when a priority of the packet is lower than a preset priority, temporarily store or discard the packet.

In a possible implementation, each packet includes second indication information, and the second indication information indicates a priority of processing the packet.

It should be noted that there are a plurality of types of other implementations in embodiments of this application. For details, refer to the specific implementations of the first aspect and beneficial effects of the first aspect. Details are not described herein again.

According to a fifth aspect, this application provides another data transmission method. In the method, data received in a time range is encapsulated into at least two packets at a granularity of a physical antenna. A wireless device obtains data received by a plurality of physical antennas, to obtain data corresponding to the plurality of physical antennas. The wireless device separately encapsulates the data corresponding to the plurality of physical antennas into at least two packets, where data corresponding to at least one physical antenna is encapsulated in each packet, and data corresponding to different physical antennas is encapsulated in different packets. The wireless device sends the packet to a wireless device controller through a fronthaul interface.

In a possible implementation, data corresponding to one physical antenna is encapsulated in at least one packet.

In a possible implementation, the wireless device stores a first mapping table, the first mapping table includes N logical antennas of the wireless device and a plurality of physical antennas corresponding to each logical antenna, and N is an integer greater than 1. That the wireless device separately encapsulates the data corresponding to the plurality of physical antennas into at least two packets includes: The wireless device selects, based on the first mapping table, one physical antenna from the plurality of physical antennas corresponding to each logical antenna, to obtain N physical antennas. The wireless device encapsulates data corresponding to the N physical antennas into one first packet, and the wireless device encapsulates data of another physical antenna of the wireless device into at least one second packet, to obtain the at least two packets. Optionally, a priority of the first packet is higher than a priority of the second packet.

Data transmitted by a plurality of physical antennas corresponding to one logical antenna is the same. To be specific, some data in the data that corresponds to the plurality of physical antennas and that is received by the wireless device may be the same. Therefore, the wireless device only chooses to encapsulate data of some physical antennas into one packet, so that data integrity can also be ensured. In addition, because the first packet can ensure integrity of data received by the wireless device, the wireless device may determine that the priority of the first packet is higher than the priority of the second packet.

In a possible implementation, each packet includes third indication information, and the third indication information indicates a priority of processing the packet.

In a possible implementation, that the wireless device sends the packet to a wireless device controller through a fronthaul interface includes: The wireless device sends at least one packet of the at least two packets to the wireless device controller based on the priority of each packet through the fronthaul interface.

In a possible implementation, that the wireless device sends at least one packet of the at least two packets to the wireless device controller based on the priority of each packet through the fronthaul interface includes: The wireless device determines, based on the priority of each packet, a sequence of sending the at least two packets, where a sequence of sending a high-priority packet is prior to a sequence of sending a low-priority packet. The wireless device sends the at least two packets to the wireless device controller based on the sequence.

In a possible implementation, that the wireless device sends at least one packet of the at least two packets to the wireless device controller based on the priority of each packet through the fronthaul interface includes: When a priority of the packet is higher than a preset priority, the wireless device sends the packet through the fronthaul interface. When a priority of the packet is lower than a preset priority, the wireless device temporarily stores or discards the packet.

According to a sixth aspect, this application provides another wireless device. The wireless device encapsulates, into at least two packets at a granularity of a physical antenna, data received in a time range. The wireless device is connected to a wireless device controller through a fronthaul interface. The wireless device includes an obtaining module, a packet encapsulating module, and a transmission module.

The obtaining module is configured to obtain data received by a plurality of physical antennas, to obtain data corresponding to the plurality of physical antennas. The packet encapsulating module is configured to separately encapsulate the data corresponding to the plurality of physical antennas into at least two packets, where data corresponding to at least one physical antenna is encapsulated in each packet, and data corresponding to different physical antennas is encapsulated in different packets. The transmission module is configured to send the packet to the wireless device controller through the fronthaul interface.

In a possible implementation, data corresponding to one physical antenna is encapsulated in at least one packet.

In a possible implementation, the wireless device stores a first mapping table, the first mapping table includes N logical antennas of the wireless device and a plurality of physical antennas corresponding to each logical antenna, and N is an integer greater than 1.

The packet encapsulating module is configured to select, based on the first mapping table, one physical antenna from the plurality of physical antennas corresponding to each logical antenna, to obtain N physical antennas, and encapsulate data corresponding to the N physical antennas into one first packet. In addition, the wireless device encapsulates data of another physical antenna of the wireless device into at least one second packet, to obtain the at least two packets. Optionally, a priority of the first packet is higher than a priority of the second packet.

In a possible implementation, each packet includes third indication information, and the third indication information indicates a priority of processing the packet.

In a possible implementation, the transmission module is specifically configured to send at least one packet of the at least two packets to the wireless device controller based on a priority of each packet through the fronthaul interface.

In a possible implementation, the transmission module is specifically configured to: determine, based on the priority of each packet, a sequence of sending the at least two packets, where a sequence of sending a high-priority packet is prior to a sequence of sending a low-priority packet; and send the at least two packets to the wireless device controller based on the sequence.

In a possible implementation, the transmission module is specifically configured to:
when a priority of the packet is higher than a preset priority, send the packet through the fronthaul interface; or
when a priority of the packet is lower than a preset priority, temporarily store or discard the packet.

It should be noted that there are a plurality of types of other implementations in embodiments of this application. For details, refer to the specific implementations of the fifth aspect and beneficial effects of the fifth aspect. Details are not described herein again.

According to a seventh aspect, an embodiment of this application provides a communication apparatus. The communication apparatus may be the wireless device controller in the foregoing implementations, or may be a chip in the wireless device controller. The communication apparatus may include a processing module and a transceiver module. When the communication apparatus is a wireless device controller, the processing module may be a processor, and the transceiver module may be a transceiver. The wireless device controller may further include a storage module, and the storage module may be a memory. The storage module is configured to store instructions, and the processing module executes the instructions stored in the storage module, so that the wireless device controller performs the method in the first aspect or any one of the implementations of the first aspect. When the communication apparatus is a chip in a wireless device controller, the processing module may be a processor, and the transceiver module may be an input/output interface, a pin, a circuit, or the like. The processing module executes instructions stored in a storage module, so that the wireless device controller performs the method in the first aspect or any one of the implementations of the first aspect. The storage module may be a storage module (for example, a register or a buffer) in the chip, or may be a storage module (for example, a read-only memory or a random access memory) that is in the wireless device controller and that is located outside the chip.

According to an eighth aspect, an embodiment of this application provides a communication apparatus. The communication apparatus may be the wireless device in the foregoing implementations, or may be a chip in the wireless device. The communication apparatus may include a processing module and a transceiver module. When the communication apparatus is a wireless device, the processing module may be a processor, and the transceiver module may be a transceiver. The wireless device may further include a storage module, and the storage module may be a memory. The storage module is configured to store instructions, and the processing module executes the instructions stored in the storage module, so that the wireless device performs the method in the third aspect or any one of the implementations of the third aspect, or performs the method in the fifth aspect or any one of the implementations of the fifth aspect. When the communication apparatus is a chip in a wireless device, the processing module may be a processor, and the transceiver module may be an input/output interface, a pin, a circuit, or the like. The processing module executes instructions stored in a storage module, so that the wireless device performs the method in the third aspect or any one of the implementations of the third aspect, or performs the method in the fifth aspect or any one of the implementations of the fifth aspect. The storage module may be a storage module (for example, a register or a buffer) in the chip, or may be a storage module (for example, a read-only memory or a random access memory) that is in the wireless device and that is located outside the chip.

According to a ninth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method described in any one of the first aspect, the third aspect, the fifth aspect, the implementations of the foregoing aspects and the foregoing aspects.

According to a tenth aspect, an embodiment of this application provides a computer program product including instructions. When the instructions are run on a computer, the computer is enabled to perform the method described in any one of the first aspect, the third aspect, the fifth aspect, or the implementations of the foregoing aspects.

According to an eleventh aspect, an embodiment of this application provides a computer-readable storage medium, including instructions. When the instructions are run on a computer, the computer is enabled to perform the method according to any one of the first aspect, the third aspect, the fifth aspect, or the implementations of the foregoing aspects.

According to a twelfth aspect, an embodiment of this application provides a communication system. The communication system includes the wireless device controller according to the second aspect and any one of the implementations of the second aspect, and the wireless device according to the fourth aspect and any one of the implementations of the fourth aspect.

According to a thirteenth aspect, an embodiment of this application provides a communication system. The communication system includes the wireless device controller according to the second aspect and any one of the implementations of the second aspect, and the wireless device according to the sixth aspect and any one of the implementations of the sixth aspect.

### BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application.
FIG. 1A is an example diagram of fronthaul networking according to this application;
FIG. 1B is an example diagram of a fronthaul interface according to this application;
FIG. 1C is another example diagram of a fronthaul interface according to this application;
FIG. 2 is a flowchart of a data transmission method according to this application;
FIG. 3A is an example diagram of a plurality of physical channels in one time-domain unit according to this application;
FIG. 3B is another example diagram of a plurality of physical channels in one time-domain unit according to this application;
FIG. 3C is another example diagram of a plurality of physical channels in one time-domain unit according to this application;
FIG. 3D is another example diagram of a plurality of physical channels in one time-domain unit according to this application;
FIG. 4 is another flowchart of a data transmission method according to this application;
FIG. 5 is another example diagram of a plurality of physical channels in one time-domain unit according to this application;
FIG. 6 is another flowchart of a data transmission method according to this application;
FIG. 7 is a schematic diagram of an embodiment of a communication apparatus according to this application;
FIG. 8 is a schematic diagram of another embodiment of a communication apparatus according to this application;
FIG. 9 is a schematic diagram of another embodiment of a communication apparatus according to this application; and
FIG. 10 is a schematic diagram of another embodiment of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first describes a system architecture and an application scenario of a data transmission method provided in this application.

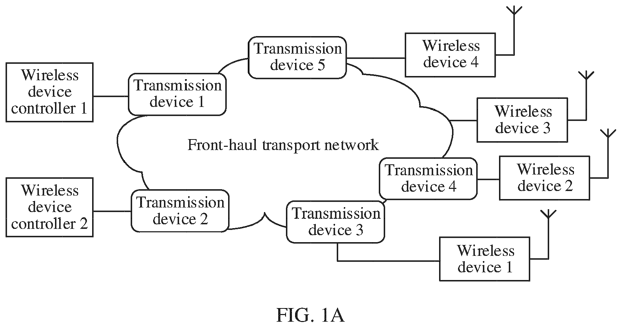

The data transmission method provided in this application is mainly applied to a system architecture in which a base station system is divided into a wireless device and a wireless device controller. As shown in FIG. 1A, the wireless device is connected to the wireless device controller through a front-haul transport network (front-haul transport network, FTN) formed by one or more transmission devices.

The front-haul transport network may be a front-haul transport network of a fourth generation mobile communication technology (the 4th generation mobile communication technology, 4G) long-term evolution (long-term evolution, LTE) system, a front-haul transport network of a fifth generation mobile communication technology (the 5th generation mobile communication technology, 5G) new radio (new radio, NR) system, a front-haul transport network of a sixth generation mobile communication technology (the 6th generation mobile communication technology, 6G) system, or even a front-haul transport network in a subsequent evolution standard.

The wireless device controller may be a network element or a device having a baseband signal processing function, or a device having a radio signal processing function for managing a radio access network (radio access network, RAN). The wireless device controller can complete a baseband signal processing function like coding, multiplexing, modulation, and spreading, can complete a function of processing signaling from a wireless device, can implement a function of performing local management and remote operation and maintenance on a wireless device, and can provide a function of clock synchronization for a transmission device or a wireless device. For example, the wireless device controller may be a base band unit (base band unit, BBU) (which is also referred to as a building base band unit (building base band unit, BBU)) in an access network device (for example, a base station). For example, in a long term evolution LTE system or an evolved LTE (long term evolution advanced, LTE-A) system, the wireless device controller may be a base band unit BBU in an evolved NodeB (evolved NodeB, eNB or e-NodeB). For another example, in a 5G NR system, the wireless device controller may be a base band unit BBU in a next generation NodeB (next generation NodeB, gNB). For example, in a 5G NR system, the wireless device controller may alternatively be a distributed unit (distributed unit, DU) in a cloud radio access network (cloud radio access network, CloudRAN) or an open radio access network (open radio access network, ORAN) system, may be a central unit (central unit, CU) (also referred to as a control unit), or may be a combination structure of a central unit CU and a distributed unit DU. In an actual application and in subsequent network evolution, the wireless device controller may alternatively be another device or apparatus having a baseband signal processing function, or another device or apparatus having a radio signal processing function for managing a radio access network RAN.

In addition, the wireless device may be a radio unit (radio unit, RU) (also referred to as a radio frequency unit) in a radio access network RAN device (for example, a base station), or may be another processing apparatus having a function of processing a radio signal (for example, an intermediate frequency signal or a radio frequency signal). For example, the wireless device may be a remote radio unit (remote radio unit, RRU) (also referred to as a remote radio module) or a remote radio head (remote radio head, RRH) in a base station. The RRU is generally used for conventional outdoor coverage of a macro base station, and the RRH is generally used for indoor coverage of an indoor distributed system. For example, in the 5G NR system, the wireless device may alternatively be an active antenna unit (active antenna unit, AAU), namely, a processing unit that integrates an RRU (or an RRH) and an antenna. In an actual application and subsequent network evolution, the wireless device may alternatively be another device or apparatus that has a function of receiving and sending a radio frequency signal, and processing a radio frequency signal or an intermediate frequency signal.

Optionally, some functions of a physical layer in a baseband unit may be moved to a radio frequency unit. In this case, the wireless device may have some functions of a physical layer of a BBU, for example, functions such as modulation, demodulation, layer mapping, fast Fourier transformation (fast fourier transformation, FFT), and channel estimation/equalization.

In addition, the foregoing transmission device is a network device for data transmission in a front-haul transport network, and transmission devices are connected through an optical fiber or another transmission medium. The transmission device may be a network device that can implement packet processing and data transmission and that integrates a packet transport network (packet transport network, PTN) device, a router, a switch, a microwave device, an optical transport network (optical transport network, OTN) device, and the like.

In addition, when a base station system is divided into a wireless device controller and a wireless device, a fronthaul interface is further defined, and the wireless device communicates with the wireless device controller through the fronthaul interface.

It should be understood that the fronthaul interface in this application may be an interface defined in a conventional technology for dividing a base station system into physical layers, for example, an enhanced common public radio interface (enhanced common public radio interface, eCPRI), a common public radio interface (common public radio interface, CPRI), and an interface in an open base station architecture initiative (open base station architecture initiative, OBSAI).

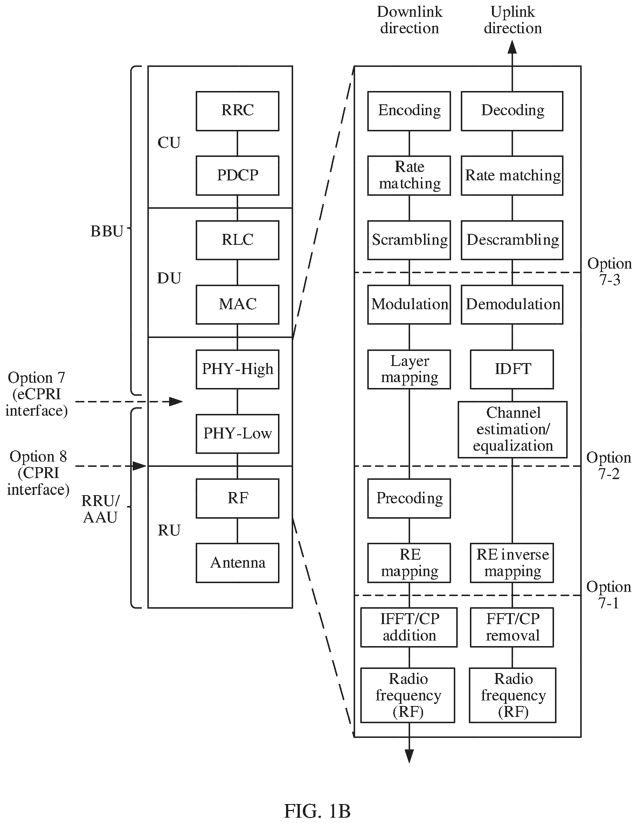

For example, as shown in FIG. 1B, in a conventional technology, a base station system may be divided into a central unit CU, a distributed unit DU, and a radio frequency unit RU. A 3GPP F1 interface is still used as a higher-layer separation interface between the CU and the DU, and there are a plurality of division solutions (for example, an option 7 (Option7) and an option 8 (Option8)) for a lower-layer separation interface between the DU and the RU based on different protocol stack separation points. A fronthaul interface defined in the option 8 (Option 8) is a CPRI interface, and a physical layer is divided into a DU, and an RU mainly includes a radio frequency function. A fronthaul interface (namely, an eCPRI interface) defined in the option 7 (Option 7) is divided in a physical layer (PHY), and may specifically include an option 7-1, an option 7-2, and an option 7-3. For example, in the option 7-1, FFT/Cyclic Prefix (cyclic prefix, CP) removal and a part of a filtering function in a PHY uplink direction, and an IFFT/CP addition function in a downlink direction are divided into the RU, while other functions of the PHY are divided into the DU. In this case, the fronthaul interface in this application may be an eCPRI based on a division manner of the option 7-1. For another example, in the option 7-2, the FFT, the CP removal, resource element (resource element, RE) inverse mapping, and a possible PRACH pre-filtering function in the PHY uplink direction, and the IFFT, the CP addition, RE mapping and a precoding function in the downlink direction are divided into the RU, while other functions of the PHY are divided into the DU. In this case, the fronthaul interface in this application may be an eCPRI based on a division manner of the option 7-2. For another example, in the option 7-3, only an encoding and decoding function, a rate matching function, and a scrambling and descrambling function of the PHY are divided into the DU, and other functions of the PHY are divided into the RU. In this case, the fronthaul interface in this application may be an eCPRI based on a division manner of the option 7-3.

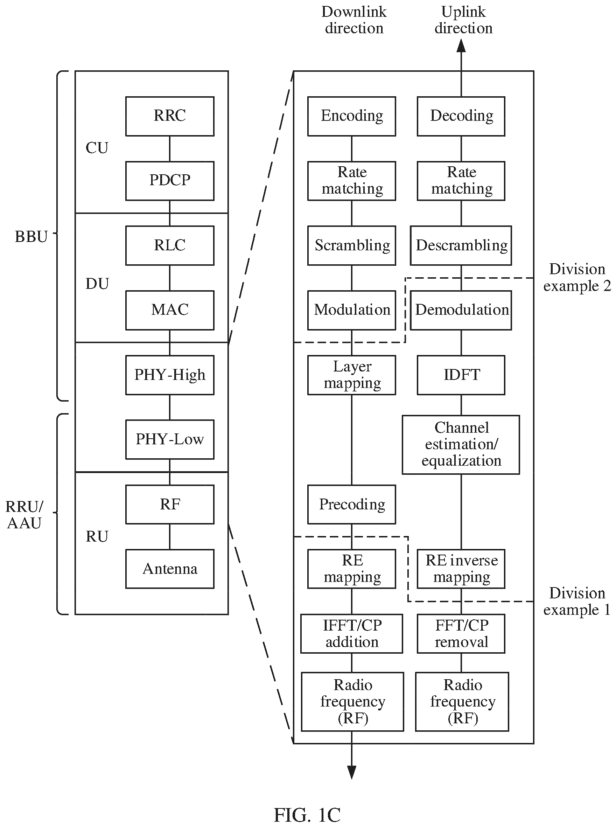

It should be further understood that, with development of wireless technologies, the fronthaul interface in this application may alternatively be an interface for dividing a base station system at a physical layer in another division manner (that is, not limited to a function division manner shown in FIG. 1B). As shown in FIG. 1C, in a division example 1, the FFT/CP removal and the part of the filtering function in the PHY uplink direction and the IFFT/CP addition function and RE mapping in the downlink direction are divided into the RU, and other functions of the PHY are divided into the DU. For another example, in a division example 2, the encoding and decoding function, the rate matching function, the scrambling and descrambling function of the PHY, and a modulation function in a PHY downlink direction are divided into the DU, and other functions of the PHY are divided into the RU. In an actual application, different vendors may further use another physical layer division manner. This is not specifically limited herein.

It should be further understood that, when communication protocols used between the wireless device controller and the wireless device are different, that is, when the fronthaul interfaces used between the wireless device controller and the wireless device are different, a name of the wireless device controller may be different, and a name of the wireless device may also be different. For example, in a common public radio interface (common public radio interface, CPRI) protocol, the wireless device controller is referred to as a radio equipment control (radio equipment control, REC), and the wireless device is referred to as a radio equipment (radio equipment, RE). In an enhanced common public radio interface (enhanced common public radio interface, eCPRI) protocol, the wireless device controller is referred to as an eCPRI radio equipment control (eCPRI radio equipment control, eREC), and the wireless device is referred to as an eCPRI radio equipment (eCPRI radio equipment, eRE). It should be understood that, in other protocols that provide communication for a baseband unit and a radio frequency unit, the wireless device controller may also have another name. Specifically, a specific implementation form and a specific name of the wireless device controller are not limited in this application, and are described below with the name "wireless device controller". Similarly, in other protocols that provide communication for a baseband unit and a radio frequency unit, the wireless device may also have another name. Specifically, a specific implementation form and a specific name of the wireless device are not limited in this application, and are described below with the name "wireless device".

In a conventional technology, when a base station performs division at a physical layer (for example, the option 7-1, the option 7-2, the option 7-3, or another interface for division at the physical layer), a wireless device controller is communicatively connected to a wireless device through a fronthaul interface. In addition, the wireless device controller encapsulates, into one packet, all data configured to be sent in each time-domain unit, and communicates the packet with the wireless device by using the transmission device. Similarly, the wireless device encapsulates, into one packet, all data configured to be sent in each time-domain unit, and communicates the data with the wireless device controller by using the transmission device. Therefore, the fronthaul interface needs to be able to tolerate a high bandwidth, and a transmit end and a receive end need to have high processing capabilities. However, with development of wireless technologies, a fronthaul data amount increases sharply, and a bandwidth limitation of a fronthaul interface may affect data transmission.

Therefore, according to the data transmission method provided in this application, a granularity of a packet assembly of a wireless device controller or a wireless device can be reduced, that is, a payload size of a packet transmitted between the wireless device controller or the wireless device is reduced. In this way, a bandwidth requirement of a fronthaul interface during the data transmission is reduced.

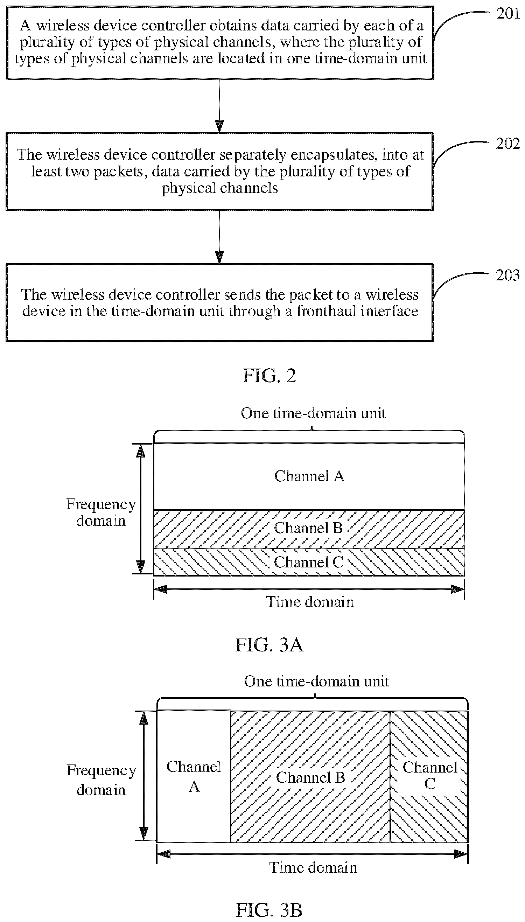

The following describes a main procedure of the data transmission method provided in this application with reference to FIG. 2. A wireless device controller performs the following steps.

Step 201: The wireless device controller obtains data carried by each of a plurality of types of physical channels, where the plurality of types of physical channels are located in one time-domain unit.

A frequency domain resource corresponding to the time-domain unit includes the plurality of physical channels. The data obtained by the wireless device controller is data carried by a physical channel on the frequency domain resource corresponding to the time-domain unit. The time-domain unit may be a symbol (symbol) (for example, an orthogonal frequency division multiplexing (orthogonal frequency division multiplexing, OFDM) symbol), a slot (slot), a subframe (subframe), a transmission time interval (transmission time interval, TTI), or the like. In other words, the data obtained by the wireless device controller may be data carried by a plurality of physical channels in one symbol, may be data carried by a plurality of physical channels in one slot, may be data carried by a plurality of physical channels in one subframe, or may be data carried by a plurality of physical channels in one transmission time interval.

In addition, the physical channel is a downlink physical channel. For example, the physical channel may be a physical downlink shared channel (physical downlink shared channel, PDSCH), a physical downlink control channel (physical downlink control channel, PDCCH), a physical broadcast channel (physical broadcast channel, PBCH), a physical multicast channel (physical multicast channel, PMCH), a physical control format indicator channel (physical control format indicator channel, PCFICH), a physical hybrid automatic repeat request (hybrid automatic repeat request, HARQ) indicator channel (physical Hybrid ARQ indicator channel, PHICH), or the like. The PDSCH is divided based on a function, and is further divided into a PDSCH for carrying a demodulation signal (demodulation reference signal, DMRS), and a PDSCH for carrying a channel state information reference signal (channel state information-reference signal, CSI-RS). In addition, in some communication systems (for example, an LTE system), the physical channel may alternatively be an enhanced physical downlink control channel (enhanced physical downlink control channel, EPDCCH), a machine type communication (machine type communication, MTC) physical downlink control channel (MTC physical downlink control channel, MPDCCH), a short physical downlink control channel (short physical downlink control channel, SPDCCH), and the like.

It should be understood that there may be a plurality of types of physical channels or only one type of physical channel on a frequency domain resource corresponding to one time-domain unit. This application mainly discusses a case in which there are a plurality of types of physical channels on a frequency domain resource corresponding to one time-domain unit.

Specifically, data that is carried by a plurality of types of physical channels on a frequency domain resource corresponding to one time-domain unit and that is obtained by the wireless device controller may be data carried by all physical channels on the frequency domain resource corresponding to the time-domain unit, or may be data carried by some physical channels on the frequency domain resource corresponding to the time-domain unit. For example, a frequency domain resource corresponding to one time-domain unit includes three types of physical channels: a channel A, a channel B, and a channel C. The wireless device controller may obtain only data carried by two types of physical channels (for example, data carried by the channel A and data carried by the channel B). The wireless device controller may alternatively obtain data carried by the three types of physical channels, namely, the data carried by the channel A, the data carried by the channel B, and data carried by the channel C.

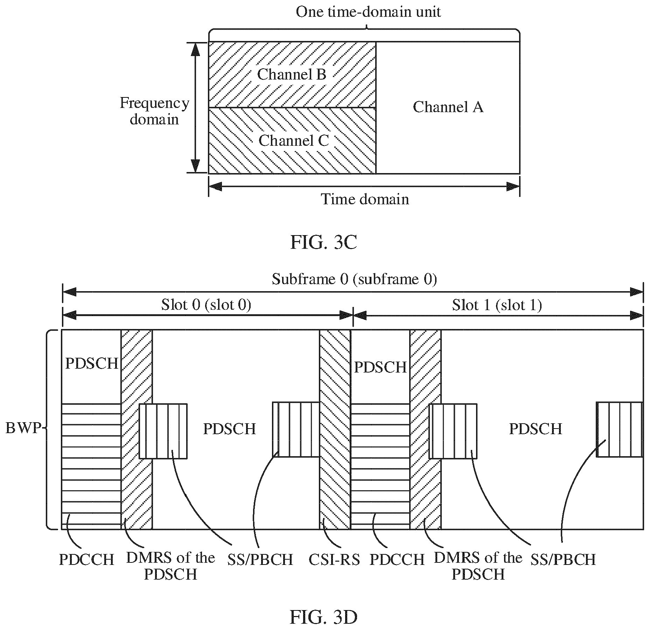

It should be understood that, in frequency domain, the foregoing plurality of types of physical channels may be located at a same frequency domain position or different frequency domain positions. In time domain, the foregoing plurality of types of physical channels may be located at a same time domain position or different time domain positions. For example, in an example shown in FIG. 3A, the channel A, the channel B, and the channel C have a same time domain position, but different frequency domain positions. For another example, in an example shown in FIG. 3B, the channel A, the channel B, and the channel C have a same frequency domain position, but different time domain positions. For another example, in an example shown in FIG. 3C, the channel B and the channel C have a same time domain position but different frequency domain positions.

It should be further understood that, in frequency domain, each type of physical channel may occupy an entire system bandwidth, or may occupy some frequency domain resources in a system bandwidth. In time domain, each type of physical channel may occupy the entire time-domain unit, or may occupy some time domain resources in the time-domain unit. For example, in the example shown in FIG. 3A, in time domain, the channel A, the channel B, and the channel C each occupy an entire time-domain unit; and in frequency domain, the channel A, the channel B, and the channel C each occupy some frequency domain resources in the system bandwidth. For another example, in the example shown in FIG. 3B, in frequency domain, the channel A, the channel B, and the channel C all occupy the entire system bandwidth; and in time domain, the channel A, the channel B, and the channel C each occupy some time domain resources of the time-domain unit.

It should be understood that whether the wireless device controller obtains data carried by a physical channel in a time-domain unit may be determined based on a type of the physical channel in the time-domain unit. Each type of physical channel corresponds to a priority, and the priority indicates a priority degree of processing (or transmitting) data carried by the physical channel. Generally, priorities corresponding to different types of physical channels may be the same or may be different.

In an optional implementation, the wireless device controller may store a first correspondence, the first correspondence is a correspondence between a physical channel and a priority. The wireless device controller may learn, based on the foregoing first correspondence, a priority corresponding to each type of physical channel, so as to selectively obtain data carried by a plurality of physical channels with a high priority in one time-domain unit, but temporarily do not obtain data carried by one or more physical channels with a low priority.

The priority degree indicated by the priority may be represented by using a value, or may be represented by using different English letters. In an actual application, another character may be used for representation. This is not limited herein. For example, a value is used to represent a priority. The first correspondence may be shown in Table 1-1.

**Table 1-1**

| Types of physical channels | Priority |
|---|---|
| PBCH | 1 |
| PDSCH | 2 |
| PDCCH | 2 |
| PCFICH | 2 |
| PHICH | 2 |
| PMCH | 3 |

In the example shown in Table 1-1, the PDSCH, the PDCCH, the PCFICH, and the PHICH have a same priority. If the characters "1", "2", and "3" represent priorities in descending order, the wireless device controller may learn, based on the first correspondence, that a priority of the PBCH is the highest, priorities of the PDSCH, the PDCCH, the PCFICH, and the PHICH are lower than the priority of the PBCH, and a priority of the PMCH is lower than the priorities of the PDSCH, the PDCCH, the PCFICH, and the PHICH.

It should be understood that Table 1-1 is merely a possible example enumerated in this embodiment. In an actual application, the priorities of the foregoing physical channels are not necessarily completely the same as the examples shown in Table 1-1. Priorities corresponding to various physical channels are not limited in this application.

It should be understood that, regardless of whether the data obtained by the wireless device controller is carried by all physical channels in one time-domain unit or carried by some physical channels in one time-domain unit, the wireless device controller may encapsulate the obtained data into at least two packets. For details, refer to step 202.

Step 202: The wireless device controller separately encapsulates, into at least two packets, data carried by the plurality of types of physical channels.

Specifically, the wireless device controller separately encapsulates, into the at least two packets at a granularity of a channel, the data carried by the foregoing plurality of types of physical channels. Data carried by at least one type of physical channel is encapsulated in each packet, that is, only data carried by one type of physical channel in the time-domain unit may be encapsulated in each packet, or data carried by a plurality of types of physical channels in the time-domain unit may be encapsulated in each packet.

Optionally, data carried by different types of physical channels is encapsulated in different packets. Specifically, if the data carried by the at least one type of physical channel in the time-domain unit is encapsulated in each packet, a channel that carries data encapsulated in one of the at least two packets is different from a channel that carries data encapsulated in the another packet. For example, the at least two packets include a first packet and a second packet. Data carried by a first physical channel in a first time-domain unit is encapsulated in the first packet, and data carried by a second physical channel in the first time-domain unit is encapsulated in the second packet, where the first physical channel and the second physical channel are channels of different types.

Optionally, data carried by one type of physical channel is encapsulated in at least one packet. Specifically, the wireless device controller may encapsulate, into only one packet, data carried by one type of physical channel in the time-domain unit, or may encapsulate a part of data of one type of physical channel in the time-domain unit into one packet, and encapsulate another part of data of the physical channel into another packet.

The following describes several possible implementations with reference to specific examples.

In a possible implementation, the wireless device controller encapsulates, into one packet, data carried by each type of physical channel, and only data carried by one type of physical channel is encapsulated in each packet. Specifically, the at least two packets include a first packet and a second packet, data carried by a first physical channel is encapsulated in the first packet, data carried by a second physical channel is encapsulated in the second packet, and the first physical channel and the second physical channel are located in one time-domain unit.

For example, if the wireless device controller obtains data carried by three types of physical channels: a channel A, a channel B, and a channel C, and the three types of physical channels are all located on a frequency domain resource corresponding to one time-domain unit, in this case, the wireless device controller may encapsulate, into one packet (referred to as a packet 1 in this example), the data carried by the channel A, encapsulate, into another packet (referred to as a packet 2 in this example), data carried by the channel B, and encapsulate, into another packet (referred to as a packet 3 in this example) other than the foregoing two packets, data carried by the channel C. Therefore, the wireless device controller obtains the three packets: the packet 1, the packet 2, and the packet 3.

For ease of understanding, the following provides a description with reference to a specific example. FIG. 3D shows a time-frequency resource corresponding to one subframe, and the subframe 0 (subframe 0) includes two slots (namely, a slot 0 (slot 0) and a slot 1 (namely, slot 1)). A frequency domain resource corresponding to the slot 0 includes five downlink physical channels: a PDSCH, a PDCCH, an SS/PBCH, a DMRS of the PDSCH, and a CSI-RS. If one slot is one time-domain unit, the wireless device controller may respectively encapsulate five packets based on the foregoing five types of downlink physical channels, and data carried by one type of downlink physical channel is encapsulated in each packet. For example, the at least two packets include a first packet and a second packet, data carried by the PDSCH is encapsulated in the first packet, data carried by the PDCCH is encapsulated in the second packet, and the PDSCH and the PDCCH are located in one time-domain unit.

In this implementation, the wireless device controller encapsulates, in different packets at a granularity of a physical channel, data carried by different types of physical channels in one time-domain unit. However, in a conventional technology, the wireless device controller encapsulates, into one packet, data carried by all physical channels in one time-domain unit. Therefore, compared with the conventional technology, in this implementation, an amount of data encapsulated in each packet is reduced, that is, a payload of each packet is reduced. Therefore, a size of a packet transmitted by a fronthaul interface is reduced. This helps reduce a bandwidth requirement for the fronthaul interface and also helps reduce a bandwidth requirement for a transmission device in a front-haul transport network.

In another possible implementation, the wireless device controller divides the foregoing plurality of types of physical channels into at least two physical channel groups, where each physical channel group includes at least one type of physical channel, and different physical channel groups include different types of physical channels. Then, the wireless device controller encapsulates, into one packet, data carried by each group of physical channels. Therefore, the wireless device controller can encapsulate, into at least two packets, data carried by a plurality of types of physical channels.

For example, if the wireless device controller obtains data carried by five types of physical channels: a channel A, a channel B, a channel C, a channel D, and a channel E, and the five types of physical channels are all located on a frequency domain resource corresponding to one time-domain unit, in this case, according to a rule, the wireless device controller may group the channel A and the channel B into a channel group 1, group the channel C and the channel D into a channel group 2, and separately use the channel E as a channel group. Then, the wireless device controller encapsulates, into one packet (referred to as a packet 4 in this example), data carried by the channel group 1 (namely, data carried by the channel A and data carried by the channel B), encapsulates, into one packet (referred to as a packet 5 in this example), data carried by the channel group 2 (namely, data carried by the channel C and data carried by the channel D), and encapsulates, into one packet (referred to as a packet 6 in this example), data carried by the channel group 3 (namely, data carried by the channel E). Therefore, the wireless device controller obtains the three packets: the packet 4, the packet 5, and the packet 6.

Specifically, the wireless device controller may use two or more types of associated physical channels as one physical channel group. For example, data carried by one physical channel is used to demodulate data carried by another physical channel. For example, on an NR downlink physical channel, because data carried by a PDCCH is used to demodulate a PDSCH, the PDSCH and the PDCCH may form one channel group. For another example, in an LTE downlink physical channel, because an ePDCCH is used to transmit downlink control information (downlink control information, DCI) and indicates information such as a resource indicator, a modulation and coding scheme, and a HARQ process number of a PDSCH, the PDSCH and the ePDCCH may form one channel group.

For ease of understanding, FIG. 3D is still used as an example for description. FIG. 3D shows a time-frequency resource corresponding to one subframe, and the subframe 0 (subframe 0) includes two slots (namely, a slot 0 (slot 0) and a slot 1 (namely, slot 1)). A frequency domain resource corresponding to the slot 0 includes five downlink physical channels: a PDSCH, a PDCCH, an SS/PBCH, a DMRS of the PDSCH, and a CSI-RS. If one slot is one time-domain unit, the wireless device controller may encapsulate, into one packet, data carried by the PDSCH and data carried by the PDCCH, encapsulate, into another packet, data carried by the DMRS of the PDSCH and data carried by the SS/PBCH, and encapsulate, into another packet, data carried by the CSI-RS. Therefore, the wireless device controller obtains three packets. In this example, data carried by one or more types of physical channels is encapsulated in each packet, and different packets carry different types of physical channels.

In this implementation, not only data carried by a plurality of physical channels is encapsulated in at least two packets, but compared with the conventional technology, an amount of data encapsulated in each packet is reduced, that is, a payload of each packet is reduced. Therefore, this helps reduce a bandwidth requirement for a fronthaul interface and also helps reduce a bandwidth requirement for a transmission device in a front-haul transport network. In addition, data carried by two types of associated physical channels is encapsulated into one packet. This helps avoid that a service is affected because the data carried by the two types of associated physical channels is divided into two packets and one of the two packets is delayed or lost in transmission, and consequently, data obtained by a receive end (namely, a wireless device) is incomplete.

It should be noted that, in the foregoing two implementations, data carried by one type of physical channel is encapsulated into only one packet. However, in an actual application, if data carried by a type of physical channel is large (for example, the data carried by the physical channel is greater than one maximum transmission unit (maximum transmission unit, MTU)), the wireless device controller may also encapsulate, into a plurality of packets, the data carried by the type of physical channel. For example, if the data carried by the channel A is greater than one MTU and less than two MTUs, the wireless device controller may encapsulate, into two packets, the data carried by the channel A. In this case, payload sizes of the foregoing two packets may be the same, or may be different. In an implementation, the payload sizes of the two packets are different. For example, a payload size of one packet (referred to as a packet 1) is equal to a size of one MTU, and data that is of the data carried by the channel A and that is not encapsulated in the packet 1 is encapsulated in another packet (referred to as a packet 2). In this case, a payload size of the packet 2 is less than a size of one MTU. In this case, data carried by another type of physical channel may be further encapsulated in the packet 2. In another implementation, the payload sizes of the two packets are the same. For example, two halves of the data carried by the channel A are respectively encapsulated in the two packets. In this case, data carried by another type of physical channel may be further separately encapsulated in the foregoing two packets.

In an actual application, in addition to the foregoing implementations, data carried by a plurality of physical channels may be encapsulated into at least two packets in another manner. This is not specifically enumerated one by one herein.

In addition, in any one of the foregoing implementations, each packet carries frequency domain position indication information, and the frequency domain position indication information indicates a frequency domain position of a physical channel that carries data in the packet. For example, the frequency domain position indication information may be a number of a carrier, an index value of a resource block (resource block, RB), or an index value of a resource element (resource element, RE). This is not specifically limited herein.

Optionally, each packet further carries time domain position indication information, and the time domain position indication information indicates a time domain position of the foregoing time-domain unit, namely, a time domain position of one time-domain unit in which the plurality of physical channels are located. For example, when the time-domain unit is a symbol, the time domain position indication information is an index value of the symbol. When the time-domain unit is a slot, the time domain position indication information is an index value of the slot. When the time-domain unit is a subframe, the time domain position indication information is an index value of the subframe. When the time-domain unit is a transmission time interval TTI, the time domain position indication information is an index value of the transmission time interval TTI.

In the conventional technology, data carried by all physical channels in one time-domain unit is encapsulated in one packet. Therefore, a packet in the conventional technology carries only time domain position indication information, but does not carry frequency domain position indication information. Generally, the receive end (namely, the wireless device) needs to determine, based on a time-frequency domain position mapping rule and time domain position indication information that are pre-agreed on with the wireless device controller, specific types of physical channels that carry data encapsulated in each packet. However, in this application, because the wireless device controller encapsulates, into at least two packets, data carried by a plurality of types of physical channels in one time-domain unit, carrying frequency domain position indication information in each packet helps the receive end (namely, the wireless device) learn of a specific type of physical channel that carries data encapsulated in each packet.

Optionally, if the wireless device controller stores a first correspondence, and the first correspondence is a correspondence between a physical channel and a priority, the wireless device controller may learn, based on the first correspondence, a priority corresponding to each type of physical channel, so as to encapsulate a packet based on a sequence indicated by the priority corresponding to each type of physical channel.

In an optional implementation, the wireless device controller may encapsulate, into a packet based on the sequence indicated by the priority corresponding to each type of physical channel, data that is carried by a plurality of types of physical channels and that is obtained by the wireless device controller. For example, if a priority of the channel B is higher than a priority of the channel A, and the priority of the channel A is higher than a priority of the channel C, the wireless device controller first encapsulates, into one packet (namely, the packet 2), the data carried by the channel B, the wireless device controller then encapsulates, into one packet (namely, the packet 1), the data carried by the channel A, and then, the wireless device controller encapsulates, into one packet (namely, the packet 3), the data carried by the channel C. Therefore, the wireless device controller sequentially obtains the three packets: the packet 2, the packet 1, and the packet 3. For another example, if a priority of the channel group 1 (including the channel A and the channel B) is higher than a priority of the channel group 2 (including the channel C and the channel D), and the priority of the channel group 2 is higher than a priority of the channel group 3 (including the channel E), the wireless device controller first encapsulates, into one packet (namely, the packet 4), the data carried by the channel group 1, the wireless device controller then encapsulates, into one packet (namely, the packet 5), the data carried by the channel group 2, and then, the wireless device controller encapsulates, into one packet (namely, the packet 6), the data carried by the channel group 3. Therefore, the wireless device controller sequentially obtains the three packets: the packet 4, the packet 5, and the packet 6.

In another optional implementation, if a processing capability of the wireless device controller is limited, the wireless device controller may alternatively selectively encapsulate, into a packet, data carried by a physical channel with a higher priority, but does not encapsulate data carried by a physical channel with a lower priority. For example, if the priority of the channel B is higher than the priority of the channel A, and the priority of the channel A is higher than the priority of the channel C, the wireless device controller determines to encapsulate only the data carried by the channel B and the data carried by the channel A. In other words, the wireless device controller first encapsulates, into one packet, the data carried by the channel B, and then, the wireless device controller encapsulates, into another packet, the data carried by the channel A, but does not encapsulate the data carried by the channel C. Therefore, the wireless device controller sequentially obtains the packet into which the data carried by the channel B is encapsulated and the packet into which the data carried by the channel A is encapsulated.

It should be understood that, in this step, the packet generated by the wireless device controller is an Internet Protocol (Internet Protocol, IP) packet or an Ethernet packet. The wireless device controller may encapsulate, into a payload of the IP packet, data carried by a physical channel, or may encapsulate, into a payload of the Ethernet packet, data carried by a physical channel. This is not specifically limited herein.

Optionally, in any one of the foregoing implementations, each packet further includes first indication information, and the first indication information indicates a priority of processing the packet, that is, indicates a priority of processing the packet by a transmission device like a router or a switch, so that the transmission device like the router or the switch preferentially processes a high-priority packet based on the priority, to ensure preferential transmission of the high-priority packet. The first indication information may be carried in a type of service (Type of Service) field in an IP packet header, or may be carried in a TAG field in the Ethernet packet.

In this embodiment, the first indication information is determined by the wireless device controller based on a type of a physical channel corresponding to data encapsulated in the packet and the first correspondence. Specifically, if only data carried by one type of physical channel is encapsulated in the packet, the wireless device controller may determine that a priority corresponding to the physical channel is a priority of the packet. If only data carried by a plurality of types of physical channels is encapsulated in the packet, the wireless device controller may determine that the highest priority among a plurality of priorities corresponding to the plurality of types of physical channels is a priority of the packet.

Step 203: The wireless device controller sends the packet to the wireless device in the time-domain unit through the fronthaul interface.

In this embodiment, the wireless device controller determines, based on a priority of each packet, a sequence of sending the at least two packets. Therefore, the priority of the packet also indicates a priority degree of sending, by the wireless device controller, a packet carrying data carried by the physical channel.

For example, the at least two packets include a first packet and a second packet, and a priority of a physical channel in the first packet is higher than a priority of a physical channel in the second packet. In this case, the wireless device controller first sends the first packet, and then, sends the second packet.

For example, the at least two packets include a first packet and a second packet, where data carried by a PDCCH is encapsulated in the first packet, data carried by a PDSCH is encapsulated in the second packet, and the PDCCH and the PDSCH are located in one time-domain unit. If a priority of the PDCCH is higher than a priority of the PDSCH, a priority of the first packet is higher than a priority of the second packet. In this case, the wireless device controller first sends the first packet, and then, sends the second packet.

In this application, it is understood from the perspective of internal processing logic of the wireless device controller that the wireless device controller first sends the first packet, and then, sends the second packet. To be specific, the first packet is first placed in an output queue (or a sending queue), and the second packet is then placed in the output queue. It is understood from the perspective of data transmission on the fronthaul interface that a next-hop network device of the wireless device controller first receives the first packet, and then, receives the second packet. When the wireless device controller is directly connected to the wireless device, the next-hop network device is the foregoing wireless device. When the wireless device controller is connected to the wireless device through a transmission device, the next-hop network device is a transmission device directly connected to the wireless device controller.

It should be understood that, in this step, the wireless device controller may send all encapsulated packets in a sequence indicated by the priority, or may send some encapsulated packets in a sequence indicated by the priority. The following provides specific descriptions.

In a possible implementation, the wireless device controller sends, in the time-domain unit through the fronthaul interface, all the packets encapsulated in step 202 to the wireless device.

Specifically, the wireless device controller determines, based on the priority of each packet, a sequence of sending the at least two packets, where a sequence of sending a high-priority packet is prior to a sequence of sending a low-priority packet. The wireless device controller sends the at least two packets to the wireless device in the time-domain unit based on the sequence through the fronthaul interface.

In a possible implementation, the wireless device controller sends, in the time-domain unit through the fronthaul interface, at least one packet of the at least two packets encapsulated in step 202 to the wireless device.

Specifically, when a priority of the packet is higher than a preset priority, the wireless device controller sends the packet in the time-domain unit through the fronthaul interface. Specifically, the wireless device controller sends the packet based on a sequence indicated by the priority of the packet. When the priority of the packet is lower than the preset priority, the wireless device controller temporarily stores or discards the packet.

In this implementation, because some low-priority packets are temporarily stored or discarded, an amount of data communicated by the wireless device controller with the wireless device through the fronthaul interface is reduced. Therefore, a bandwidth requirement for the fronthaul interface is reduced, and a bandwidth requirement for processing a packet by a transmission device like a router or a switch is also reduced.

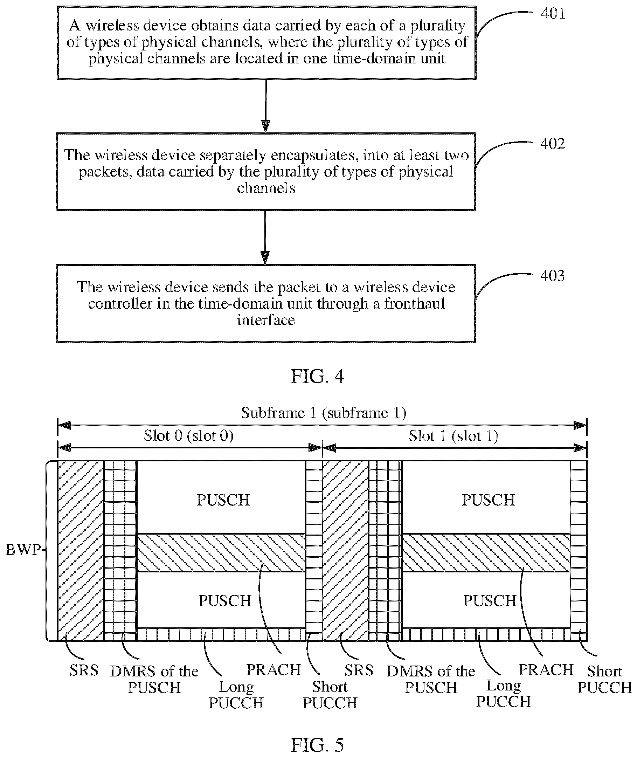

In this application, in addition to the wireless device controller communicating data by using the method described in the foregoing embodiment, the wireless device may alternatively encapsulate a packet and communicate data with the wireless device controller by using the method described in the foregoing embodiment. The following describes a main procedure of a data transmission method performed by a wireless device with reference to FIG. 4.

Step 401: A wireless device obtains data carried by each of a plurality of types of physical channels, where the plurality of types of physical channels are located in one time-domain unit.

The data obtained by the wireless device is data carried by a physical channel on a frequency domain resource corresponding to a time-domain unit. The time-domain unit may be a symbol (symbol), a slot (slot), a subframe (subframe), a transmission time interval (transmission time interval, TTI), or the like. In other words, the data obtained by the wireless device may be data carried by a plurality of physical channels in one symbol, may be data carried by a plurality of physical channels in one slot, may be data carried by a plurality of physical channels in one subframe, or may be data carried by a plurality of physical channels in one transmission time interval.

In addition, the physical channel is an uplink physical channel. For example, the physical channel may be a physical uplink shared channel (physical uplink shared channel, PUSCH), a physical uplink control channel (physical uplink control channel, PUCCH), a physical random access channel (physical random access channel, PRACH), or the like. In addition, in some communication systems (for example, an LTE system), the physical channel may alternatively be a short physical uplink control channel (short physical uplink control channel, SPUCCH) or the like. Optionally, in some system architectures, the foregoing physical channel may be a long PUCCH (Long PUCCH) or a short PUCCH (Short PUCCH).

It should be understood that there may be a plurality of types of physical channels or only one type of physical channel on a frequency domain resource corresponding to one time-domain unit. This application mainly discusses a case in which there are a plurality of types of physical channels on a frequency domain resource corresponding to one time-domain unit.

Specifically, data that is carried by a plurality of physical channels on a frequency domain resource corresponding to one time-domain unit and that is obtained by the wireless device may be data carried by all physical channels on the frequency domain resource corresponding to the time-domain unit, or may be data carried by some physical channels on the frequency domain resource corresponding to the time-domain unit. For example, a frequency domain resource corresponding to one time-domain unit includes three types of physical channels: a channel A, a channel B, and a channel C. The wireless device may obtain only data carried by two types of physical channels (for example, data carried by the channel A and data carried by the channel B). The wireless device may alternatively obtain data carried by the three physical channels, namely, the data carried by the channel A, the data carried by the channel B, and data carried by the channel C.

It should be understood that, in frequency domain, the foregoing plurality of types of physical channels may be located at a same frequency domain position or different frequency domain positions. In time domain, the foregoing plurality of types of physical channels may be located at a same time domain position or different time domain positions. It should be further understood that, in frequency domain, each type of physical channel may occupy an entire system bandwidth, or may occupy some frequency domain resources in a system bandwidth. In time domain, each type of physical channel may occupy the entire time-domain unit, or may occupy some time domain resources in the time-domain unit. Specifically, refer to the foregoing related examples corresponding to FIG. 3A, FIG. 3B, and FIG. 3C. Details are not described herein again.

It should be understood that whether the wireless device obtains data carried by a physical channel on a frequency domain resource corresponding to a time-domain unit may be determined based on a type of the physical channel included on the frequency domain resource corresponding to the time-domain unit. Each type of physical channel corresponds to a priority, and the priority indicates a priority degree of processing (or transmitting) data carried by the physical channel. Generally, priorities corresponding to different types of physical channels may be the same or may be different.

In an optional implementation, the wireless device may store a second correspondence, the second correspondence is a correspondence between a physical channel and a priority. The wireless device may learn, based on the foregoing second correspondence, a priority corresponding to each type of physical channel, so as to selectively obtain data carried by a plurality of physical channels with a high priority in one time-domain unit, but temporarily do not obtain data carried by one or more physical channels with a low priority.

The priority degree indicated by the priority may be represented by using a value, or may be represented by using different English letters. In an actual application, another character may be used for representation. This is not limited herein. For example, a value is used to represent a priority. The second correspondence may be shown in Table 2-1.

**Table 2-1**

| Types of physical channels | Priority |
|---|---|
| PRACH | 1 |
| PUSCH | 2 |
| PUCCH | 3 |

In the example shown in Table 2-1, if the characters "1", "2", and "3" represent priorities in descending order, the wireless device may learn, based on the first correspondence, that a priority of the PRACH is the highest, a priority of the PUSCH is lower than the priority of the PRACH, and a priority of the PUCCH is lower than the priority of the PUSCH.

It should be understood that Table 2-1 is merely a possible example enumerated in this embodiment. In an actual application, priorities of the foregoing physical channels are not necessarily completely the same as the examples shown in Table 2-1. Priorities corresponding to various physical channels are not limited in this application.

It should be understood that, regardless of whether the data obtained by the wireless device is carried by all physical channels in one time-domain unit or carried by some physical channels in one time-domain unit, the wireless device may encapsulate the obtained data into at least two packets. For details, refer to step 402.

Step 402: The wireless device separately encapsulates, into at least two packets, data carried by the plurality of types of physical channels.

Specifically, the wireless device separately encapsulates, into the at least two packets at a granularity of a channel, the data carried by the foregoing plurality of types of physical channels. Data carried by at least one type of physical channel is encapsulated in each packet, that is, only data carried by one type of physical channel in the time-domain unit may be encapsulated in each packet, or data carried by a plurality of types of physical channels in the time-domain unit may be encapsulated in each packet.

Optionally, data carried by different types of physical channels is encapsulated in different packets. Specifically, if the data carried by the at least one type of physical channel in the time-domain unit is encapsulated in each packet, a channel that carries data encapsulated in one of the at least two packets is different from a channel that carries data encapsulated in the another packet. For example, the at least two packets include a first packet and a second packet. Data carried by a first physical channel in a first time-domain unit is encapsulated in the first packet, and data carried by a second physical channel in the first time-domain unit is encapsulated in the second packet, where the first physical channel and the second physical channel are channels of different types.

Optionally, data carried by one type of physical channel is encapsulated in at least one packet. Specifically, the wireless device may encapsulate, into only one packet, data carried by one type of physical channel in the time-domain unit, or may encapsulate a part of data of one type of physical channel in the time-domain unit into one packet, and encapsulate another part of data of the physical channel into another packet.

The following describes several possible implementations with reference to specific examples.

In a possible implementation, the wireless device encapsulates, into one packet, data carried by each type of physical channel, and only data carried by one type of physical channel is encapsulated in each packet. Specifically, the at least two packets include a first packet and a second packet, data carried by a first physical channel is encapsulated in the first packet, data carried by a second physical channel is encapsulated in the second packet, and the first physical channel and the second physical channel are located in one time-domain unit.

For ease of understanding, the following provides a description with reference to a specific example. FIG. 5 shows a time-frequency resource corresponding to one subframe, and the subframe 1 (subframe 1) includes two slots (namely, a slot 0 (slot 0) and a slot 1 (namely, slot 1)). A frequency domain resource corresponding to each slot includes three types of physical channels: a PUSCH, a PRACH, and a PUCCH. The PUSCH includes a PUSCH for carrying common data, a PUSCH for carrying a DMRS, and a PUSCH (represented by an SRS in the figure) for carrying a channel sounding reference signal (sounding reference signal, SRS). The PUCCH includes a long PUCCH (Long PUCCH) and a short PUCCH (Short PUCCH). If one slot is one time-domain unit, the wireless device may separately encapsulate a plurality of packets based on the various uplink physical channels, and data carried by one type of uplink physical channel is encapsulated in each packet. For example, data carried by the PUCCH is encapsulated in one packet, data carried by the PUSCH is encapsulated in another packet, and data carried by the PRACH is encapsulated in another packet. Particularly, the wireless device may further consider the long PUCCH and the short PUCCH as two types of physical channels. In this case, the wireless device may separately encapsulate one packet based on data carried by the long PUCCH, and encapsulate another packet based on data carried by the short PUCCH. Particularly, the wireless device may further consider the SRS, the DMRS, and the common PDSCH as three types of physical channels. In this case, the wireless device may separately encapsulate one packet based on data carried by the SRS, encapsulate another packet based on data carried by the DMRS, and encapsulate another packet based on data carried by the common PDSCH.

In this implementation, the wireless device encapsulates, in different packets at a granularity of one type of physical channel, data carried by different types of physical channels in one time-domain unit. However, in a conventional technology, the wireless device encapsulates, into one packet, data carried by all physical channels on a frequency domain resource corresponding to one time-domain unit. Therefore, compared with the conventional technology, in this implementation, an amount of data encapsulated in each packet is reduced, that is, a payload of each packet is reduced. Therefore, this helps reduce a bandwidth requirement for a fronthaul interface and also helps reduce a bandwidth requirement for a transmission device in a front-haul transport network.

In another possible implementation, the wireless device divides the foregoing plurality of types of physical channels into at least two physical channel groups, where each physical channel group includes at least one type of physical channel, and different physical channel groups include different types of physical channels. Then, the wireless device encapsulates, into one packet, data carried by each group of physical channels. Therefore, the wireless device can encapsulate, into at least two packets, data carried by a plurality of types of physical channels.

Specifically, the wireless device may use two or more types of physical channels as one physical channel group. For example, the PUSCH and the PUCCH may form one channel group, or the PRACH and the PUSCH may form one channel group.

For ease of understanding, FIG. 5 is still used as an example for description. FIG. 5 shows a time-frequency resource corresponding to one subframe, and the subframe 1 (subframe 1) includes two slots (namely, a slot 0 (slot 0) and a slot 1 (namely, slot 1)). A frequency domain resource corresponding to each slot includes three types of physical channels: a PUSCH, a PRACH, and a PUCCH. The PUSCH includes a PUSCH for carrying common data, a PUSCH for carrying a DMRS, and a PUSCH (represented by an SRS in the figure) for carrying the SRS. The PUCCH includes a long PUCCH (Long PUCCH) and a short PUCCH (Short PUCCH). If one slot is one time-domain unit, the wireless device may encapsulate, into one packet, data carried by the PUSCH and data carried by the PUCCH, and encapsulate, into one packet, data carried by the PRACH. The wireless device may alternatively encapsulate, into one packet, the data carried by the PUSCH and the data carried by the PRACH, and encapsulate, into one packet, the data carried by the PUCCH.

In this implementation, not only data carried by a plurality of physical channels is encapsulated in at least two packets, but compared with the conventional technology, an amount of data encapsulated in each packet is reduced, that is, a payload of each packet is reduced. Therefore, this helps reduce a bandwidth requirement for a fronthaul interface and also helps reduce a bandwidth requirement for a transmission device in a front-haul transport network. In addition, data carried by two types of associated physical channels is encapsulated into one packet. This helps avoid that a service is affected because the data carried by the two types of associated physical channels is divided into two packets and one of the two packets is delayed or lost in transmission, and consequently, data obtained by a receive end (namely, the wireless device) is incomplete.

It should be noted that, in the foregoing two implementations, data carried by one type of physical channel is encapsulated into only one packet. However, in an actual application, if data carried by a type of physical channel is large (for example, the data carried by the physical channel is greater than one maximum transmission unit MTU), the wireless device may also encapsulate the data carried by the type of physical channel into a plurality of packets. For example, if the data carried by the channel A is greater than one MTU and less than two MTUs, the wireless device may encapsulate, into two packets, the data carried by the channel A. In this case, payload sizes of the foregoing two packets may be the same, or may be different. In an implementation, the payload sizes of the two packets are different. For example, a payload size of one packet (referred to as a packet 1) is equal to a size of one MTU, and data that is of the data carried by the channel A and that is not encapsulated in the packet 1 is encapsulated in another packet (referred to as a packet 2). In this case, a payload size of the packet 2 is less than a size of one MTU. In this case, data carried by another type of physical channel may be further encapsulated in the packet 2. In another implementation, the payload sizes of the two packets are the same. For example, two halves of the data carried by the channel A are respectively encapsulated in the two packets. In this case, data carried by another type of physical channel may be further separately encapsulated in the foregoing two packets.

In an actual application, in addition to the foregoing implementations, data carried by a plurality of physical channels may be encapsulated into at least two packets in another manner. This is not specifically enumerated one by one herein.

In addition, in any one of the foregoing implementations, each packet carries frequency domain position indication information, and the frequency domain position indication information indicates a frequency domain position of a physical channel that carries data in the packet. For example, the frequency domain position indication information may be a number of a carrier, an index value of a resource block RB, or an index value of a resource element RE. This is not specifically limited herein.

Optionally, each packet further carries time domain position indication information, and the time domain position indication information indicates a time domain position of the foregoing time-domain unit, namely, a time domain position of one time-domain unit in which the plurality of physical channels are located. For example, when the time-domain unit is a symbol, the time domain position indication information is an index value of the symbol. When the time-domain unit is a slot, the time domain position indication information is an index value of the slot. When the time-domain unit is a subframe, the time domain position indication information is an index value of the subframe. When the time-domain unit is a transmission time interval TTI, the time domain position indication information is an index value of the transmission time interval TTI.

In the conventional technology, data carried by all physical channels in one time-domain unit is encapsulated in one packet. Therefore, a packet in the conventional technology carries only time domain position indication information, but does not carry frequency domain position indication information. Generally, the receive end (namely, the wireless device) needs to determine, based on a time-frequency domain position mapping rule and time domain position indication information that are pre-agreed on with the wireless device, specific types of physical channels that carry data encapsulated in each packet. However, in this application, because the wireless device controller encapsulates, into at least two packets, data carried by a plurality of types of physical channels in one time-domain unit, carrying frequency domain position indication information in each packet helps the receive end (namely, the wireless device) learn of a specific type of physical channel that carries data encapsulated in each packet.

Optionally, if the wireless device stores a first correspondence, and the first correspondence is a correspondence between a physical channel and a priority, the wireless device may learn, based on the first correspondence, a priority corresponding to each type of physical channel, so as to encapsulate a packet based on a sequence indicated by the priority corresponding to each type of physical channel.

In an optional implementation, the wireless device may encapsulate, into a packet based on the sequence indicated by the priority corresponding to each type of physical channel, data that is carried by a plurality of physical channels and that is obtained by the wireless device. For example, if a priority of the channel B is higher than a priority of the channel A, and the priority of the channel A is higher than a priority of the channel C, the wireless device first encapsulates, into one packet (namely, a packet 2), the data carried by the channel B, the wireless device then encapsulates, into one packet (namely, a packet 1), the data carried by the channel A, and then, the wireless device encapsulates, into one packet (namely, a packet 3), the data carried by the channel C. Therefore, the wireless device sequentially obtains the three packets: the packet 2, the packet 1, and the packet 3. For another example, if a priority of a channel group 1 (including the channel A and the channel B) is higher than a priority of a channel group 2 (including the channel C and a channel D), and the priority of the channel group 2 is higher than a priority of a channel group 3 (including a channel E), the wireless device first encapsulates, into one packet (namely, a packet 4), data carried by the channel group 1, the wireless device then encapsulates, into one packet (namely, a packet 5), data carried by the channel group 2, and then, the wireless device encapsulates, into one packet (namely, a packet 6), data carried by the channel group 3. Therefore, the wireless device sequentially obtains the three packets: the packet 4, the packet 5, and the packet 6.

In another optional implementation, if a processing capability of the wireless device is limited, the wireless device may alternatively selectively encapsulate, into a packet, data carried by a physical channel with a higher priority, but does not encapsulate data carried by a physical channel with a lower priority. For example, if the priority of the channel B is higher than the priority of the channel A, and the priority of the channel A is higher than the priority of the channel C, the wireless device determines to encapsulate only the data carried by the channel B and the data carried by the channel A. In other words, the wireless device first encapsulates, into one packet, the data carried by the channel B, and then, the wireless device encapsulates, into another packet, the data carried by the channel A, but does not encapsulate the data carried by the channel C. Therefore, the wireless device sequentially obtains the packet into which the data carried by the channel B is encapsulated and the packet into which the data carried by the channel A is encapsulated.

It should be understood that, in this step, the packet generated by the wireless device is an Internet Protocol (Internet Protocol, IP) packet or an Ethernet packet. The wireless device may encapsulate, into a payload of the IP packet, data carried by a physical channel, or may encapsulate, into a payload of the Ethernet packet, data carried by a physical channel. This is not specifically limited herein.

Optionally, in any one of the foregoing implementations, each packet further includes first indication information, and the first indication information indicates a priority of processing the packet, that is, indicates a priority of processing the packet by a transmission device like a router or a switch. The first indication information may be carried in a type of service (Type of Service) field in an IP packet header, or may be carried in a TAG field in the Ethernet packet.

In this embodiment, the first indication information is determined by the wireless device based on a type of a physical channel corresponding to data encapsulated in the packet and the first correspondence. Specifically, if only data carried by one type of physical channel is encapsulated in the packet, the wireless device may determine that a priority corresponding to the physical channel is a priority of the packet. If only data carried by a plurality of types of physical channels is encapsulated in the packet, the wireless device may determine that the highest priority among a plurality of priorities corresponding to the plurality of types of physical channels is a priority of the packet.

Step 403: The wireless device sends the packet to the wireless device controller in the time-domain unit through the fronthaul interface.

In this embodiment, the wireless device determines, based on a priority of each packet, a sequence of sending the at least two packets. Therefore, the priority of the packet also indicates a priority degree of sending, by the wireless device, a packet carrying data carried by the physical channel.

For example, the at least two packets include a first packet and a second packet, and a priority of a physical channel in the first packet is higher than a priority of a physical channel in the second packet. In this case, the wireless device first sends the first packet, and then, sends the second packet.

For example, the at least two packets include a first packet and a second packet, where data carried by a PUCCH is encapsulated in the first packet, data carried by a PUSCH is encapsulated in the second packet, and the PUCCH and the PUSCH are located in one time-domain unit. If a priority of the PUCCH is higher than a priority of the PUSCH, a priority of the first packet is higher than a priority of the second packet. In this case, the wireless device first sends the first packet, and then, sends the second packet.

In this application, it is understood from the perspective of internal processing logic of the wireless device that the wireless device first sends the first packet, and then, sends the second packet. To be specific, the first packet is first placed in an output queue (or a sending queue), and the second packet is then placed in the output queue. It is understood from the perspective of data transmission on the fronthaul interface that a next-hop network device of the wireless device first receives the first packet, and then, receives the second packet. When the wireless device is directly connected to the wireless device, the next-hop network device is the foregoing wireless device controller. When the wireless device controller is connected to the wireless device through a transmission device, the next-hop network device is a transmission device directly connected to the wireless device.

It should be understood that, in this step, the wireless device may send all encapsulated packets in a sequence indicated by the priority, or may send some encapsulated packets in a sequence indicated by the priority. The following provides specific descriptions.

In a possible implementation, the wireless device sends, in the time-domain unit through the fronthaul interface, all the packets encapsulated in step 402 to the wireless device.

Specifically, the wireless device determines, based on the priority of each packet, a sequence of sending the at least two packets, where a sequence of sending a high-priority packet is prior to a sequence of sending a low-priority packet. The wireless device sends the at least two packets to the wireless device controller in the time-domain unit based on the sequence through the fronthaul interface.

In a possible implementation, the wireless device sends, in the time-domain unit through the fronthaul interface, at least one packet of the at least two packets encapsulated in step 402 to the wireless device.

Specifically, when a priority of the packet is higher than a preset priority, the wireless device sends the packet in the time-domain unit through the fronthaul interface. Specifically, the wireless device sends the packet based on a sequence indicated by the priority of the packet. When the priority of the packet is lower than the preset priority, the wireless device temporarily stores or discards the packet.

In this implementation, because some low-priority packets are temporarily stored or discarded, an amount of data communicated by the wireless device with the wireless device through the fronthaul interface is reduced. Therefore, a bandwidth requirement for the fronthaul interface is reduced, and a bandwidth requirement for processing a packet by a transmission device like a router or a switch is also reduced.

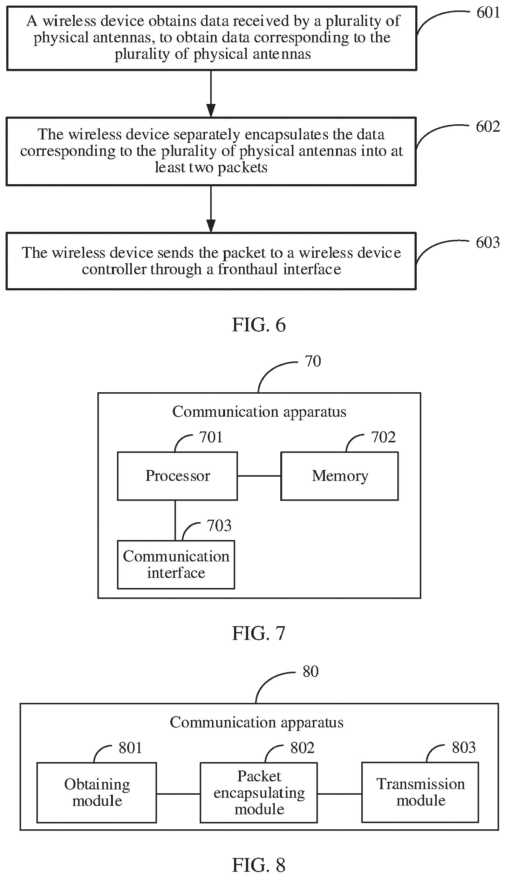

In this application, the wireless device may further encapsulate a packet at a granularity of a physical antenna. The following describes a main procedure of another embodiment of a data transmission method performed by a wireless device with reference to FIG. 6.

Step 601: The wireless device obtains data received by a plurality of physical antennas, to obtain data corresponding to the plurality of physical antennas.

The data corresponding to the plurality of physical antennas is obtained by the wireless device in a timing period. Specifically, a timer is stored in the wireless device, and the wireless device obtains data received through physical antennas from time when the timer starts to count to time when the timer expires. Subsequently, the wireless device generates a packet according to the implementation described in step 602 below. Similarly, the timer in the wireless device is restarted until the timer expires, and the wireless device obtains the data received through physical antennas again, and performs step 602 again.

Step 602: The wireless device separately encapsulates the data corresponding to the plurality of physical antennas into at least two packets.

Specifically, the wireless device separately encapsulates the data corresponding to the plurality of physical antennas into the at least two packets at the granularity of the physical antenna. Data corresponding to at least one physical antenna is encapsulated in each packet, and data corresponding to different physical antennas is encapsulated in different packets.

In a possible implementation, the wireless device encapsulates data corresponding to each physical antenna into one packet, and data corresponding to one physical antenna is only encapsulated in each packet.

For example, if the wireless device obtains, within a timing period, data corresponding to an antenna A, data corresponding to an antenna B, data corresponding to an antenna C, and data corresponding to an antenna D, the wireless device may encapsulate data corresponding to each physical antenna into one packet. To be specific, the wireless device may encapsulate the data corresponding to the antenna A into one packet (referred to as a packet 1), and encapsulate the data corresponding to the antenna B into one packet (referred to as a packet 2), encapsulate the data corresponding to the antenna C into one packet (referred to as a packet 3), and encapsulate the data corresponding to the antenna D into one packet (referred to as a packet 4). Therefore, the wireless device obtains four packets, and data corresponding to different physical antennas is encapsulated in the four packets respectively.

In this implementation, the wireless device encapsulates, at a granularity of one physical antenna in different packets, data that corresponds to different physical antennas and that is received in the timing period. However, in a conventional technology, the wireless device encapsulates, into one packet, data that corresponds to all physical antennas and that is received within one timing period. Therefore, compared with the conventional technology, in this implementation, an amount of data encapsulated in each packet is reduced, that is, a payload of each packet is reduced. Therefore, this helps reduce a bandwidth requirement for a fronthaul interface and also helps reduce a bandwidth requirement for a transmission device in a front-haul transport network.

In another possible implementation, the wireless device divides the plurality of physical antennas into at least two physical antenna groups, and each physical antenna group includes at least one physical antenna. Then, the wireless device encapsulates data corresponding to each group of physical antennas into one packet. Therefore, the wireless device can encapsulate the data corresponding to the plurality of physical antennas into the at least two packets.

Data transmitted by a plurality of physical antennas corresponding to one logical antenna is the same. To be specific, some data in data that corresponds to the plurality of physical antennas and that is received by the wireless device may be the same. Therefore, the wireless device only chooses to encapsulate data of some physical antennas into one packet, so that data integrity can also be ensured.

Specifically, the wireless device may determine a physical antenna group based on a mapping relationship between a logical antenna and a physical antenna. The wireless device stores a first mapping table. The first mapping table includes N logical antennas of the wireless device and a plurality of physical antennas corresponding to each logical antenna, where N is an integer greater than 1. The wireless device selects, based on the first mapping table, one physical antenna from the plurality of physical antennas corresponding to each logical antenna, to obtain N physical antennas. For example, the wireless device selects a physical antenna with good signal quality from the plurality of physical antennas corresponding to each logical antenna. Then, the wireless device encapsulates data corresponding to the N physical antennas into one first packet, and the wireless device encapsulates data of another physical antenna of the wireless device into at least one second packet, to obtain the at least two packets. Because the first packet can ensure integrity of data received by the wireless device, the wireless device may determine that a priority of the first packet is higher than a priority of the second packet.

For ease of understanding, an example in which the first mapping table in the wireless device is Table 3-1 is used.

**Table 3-1**

| Logical antenna | Physical antenna |
|---|---|
| Logical antenna 1 | Physical antenna 1 |
| | Physical antenna 2 |
| Logical antenna 2 | Physical antenna 3 |
| | Physical antenna 4 |
| Logical antenna 3 | Physical antenna 5 |
| | Physical antenna 6 |
| Logical antenna 4 | Physical antenna 7 |
| | Physical antenna 8 |

In the foregoing example, the wireless device may obtain, based on the first mapping table, a physical antenna corresponding to each logical antenna. If the wireless device selects, from the plurality of physical antennas, a physical antenna corresponding to the logical antenna 1 as the physical antenna 1, selects a physical antenna corresponding to the logical antenna 2 as the physical antenna 3, selects a physical antenna corresponding to the logical antenna 3 as the physical antenna 5, and selects a physical antenna corresponding to the logical antenna 4 as the physical antenna 7, the wireless device encapsulates data corresponding to the physical antenna 1, data corresponding to the physical antenna 3, data corresponding to the physical antenna 5, and data corresponding to the physical antenna 7 into one packet (referred to as the first packet). Then, the wireless device encapsulates data corresponding to remaining physical antennas into at least one second packet. For example, the wireless device may encapsulate data corresponding to the physical antenna 2 and data corresponding to the physical antenna 4 into one packet, encapsulate data corresponding to the physical antenna 6 and data corresponding to the physical antenna 8 into another packet, encapsulate data corresponding to the physical antenna 2 and data corresponding to the physical antenna 4 into another packet, and encapsulate data corresponding to the physical antenna 6 and data corresponding to the physical antenna 8 into another packet.

It should be understood that, in this step, the packet generated by the wireless device is an Internet Protocol (Internet Protocol, IP) packet or an Ethernet packet. The wireless device may encapsulate, into a payload of the IP packet, data carried by a physical channel, or may encapsulate, into a payload of the Ethernet packet, data carried by a physical channel. This is not specifically limited herein.

Optionally, in any one of the foregoing implementations, each packet further includes third indication information, and the third indication information indicates a priority of processing the packet, that is, indicates a priority of processing the packet by a transmission device like a router or a switch. The third indication information may be carried in a type of service (Type of Service) field in an IP packet header, or may be carried in a TAG field in the Ethernet packet.

Step 603: The wireless device sends the packet to a wireless device controller through the fronthaul interface.

In this embodiment, the wireless device determines, based on a priority of each packet, a sequence of sending the at least two packets.

For example, the at least two packets include a first packet and a second packet, and a priority of a physical channel in the first packet is higher than a priority of a physical channel in the second packet. In this case, the wireless device first sends the first packet, and then, sends the second packet.

It should be understood that, in this step, the wireless device may send all encapsulated packets in a sequence indicated by the priority, or may send some encapsulated packets in a sequence indicated by the priority. The following provides specific descriptions.

In a possible implementation, the wireless device sends, through the fronthaul interface, all the packets encapsulated in step 602 to the wireless device.

Specifically, the wireless device determines, based on the priority of each packet, a sequence of sending the at least two packets, where a sequence of sending a high-priority packet is prior to a sequence of sending a low-priority packet. The wireless device sends the at least two packets to the wireless device controller based on the sequence through the fronthaul interface.

In a possible implementation, the wireless device sends, in the time-domain unit through the fronthaul interface, at least one packet of the at least two packets encapsulated in step 602 to the wireless device.

Specifically, when a priority of the packet is higher than a preset priority, the wireless device sends the packet through the fronthaul interface. Specifically, the wireless device sends the packet based on a sequence indicated by the priority of the packet. When the priority of the packet is lower than the preset priority, the wireless device temporarily stores or discards the packet.

In this implementation, because some low-priority packets are temporarily stored or discarded, an amount of data communicated by the wireless device with the wireless device through the fronthaul interface is reduced. Therefore, a bandwidth requirement for the fronthaul interface is reduced, and a bandwidth requirement for processing a packet by a transmission device like a router or a switch is also reduced.

FIG. 7 is a schematic diagram of a structure of a communication apparatus 70 according to this application. It should be understood that the wireless device controller in the method embodiment corresponding to FIG. 2 may be based on the structure of the communication apparatus 70 shown in FIG. 7 in this embodiment. The communication apparatus 70 may be a network element or a device having a baseband signal processing function, or a device having a radio signal processing function for managing a radio access network RAN. For example, the communication apparatus 70 may be a base band unit (base band unit, BBU) (which is also referred to as a building base band unit (building base band unit, BBU)) in an access network device (for example, a base station). For example, in a long term evolution LTE system or an evolved LTE (long term evolution advanced, LTE-A) system, the communication apparatus 70 may be a base band unit BBU in an evolved NodeB (evolved NodeB, eNB or e-NodeB). For another example, in a 5G NR system, the communication apparatus 70 may be a base band unit BBU in a next generation NodeB (next generation NodeB, gNB). For example, in a 5G NR system, the communication apparatus 70 may alternatively be a central unit (central unit, CU) in a cloud radio access network (CloudRAN) system, may be a distributed unit (distributed unit, DU), or may be a combination structure of a central unit CU and a distributed unit DU. In an actual application and in subsequent network evolution, the communication apparatus 70 may alternatively be another network element or device having a baseband signal processing function, or another device having a radio signal processing function for managing a radio access network RAN.

Specifically, the communication apparatus 70 includes at least one processor 701, at least one memory 702, and at least one communication interface 703. The processor 701, the memory 702, and the communication interface 703 are connected by using a connection apparatus. The connection apparatus may include various types of interfaces, transmission cables, buses, or the like. This is not limited in this embodiment.

The memory 702 is mainly configured to store a software program and data. For example, the memory 702 stores a first correspondence, the first correspondence is a correspondence between a physical channel and a priority, and the priority indicates a priority degree of sending, by the communication apparatus 70, a packet carrying data carried by the physical channel.

The memory 702 may exist independently, and is connected to the processor 701. Optionally, the memory 702 and the processor 701 may be integrated, for example, integrated into one or more chips. The memory 702 can store program code for execution the technical solutions in embodiments of this application, and the processor 701 controls the execution. Various types of executed computer program code may also be considered as drivers of the processor 701. It should be understood that FIG. 7 in this embodiment shows only one memory and one processor. However, in an actual application, the communication apparatus 70 may include a plurality of processor or a plurality of memory. This is not specifically limited herein. In addition, the memory 702 may also be referred to as a storage medium, a storage device, or the like. The memory 702 may be a storage element located on a same chip as the processor (namely, an on-chip storage element), or an independent storage element. This is not limited in embodiments of this application.

In this embodiment, the communication interface 703 is configured to receive a digital baseband signal or a digital intermediate frequency signal from a radio frequency unit (for example, the wireless device described above), and provide the digital baseband signal or the digital intermediate frequency signal for the processor 701, so that the processor 701 performs further processing, for example, demodulation processing and decoding processing, on the digital baseband signal or the digital intermediate frequency signal. The communication interface 703 may further send a digital baseband signal or a digital intermediate frequency signal to a radio frequency unit (for example, the wireless device described above), so that the radio frequency unit converts a modulated digital baseband signal or a modulated digital intermediate frequency signal into a radio frequency signal, and sends the radio frequency signal through one or more antennas. For example, the communication interface 703 may be a fronthaul interface like an enhanced common public radio interface eCPRI or a common public radio interface CPRI.

Optionally, the communication interface 703 is further connected to an optical module (not shown in the figure), and the optical module is configured to convert a digital baseband signal generated by the communication apparatus 70 into an optical signal for transmission through an optical fiber. The optical module is further configured to receive an optical signal from another device (for example, the transmission device or the wireless device described above), and convert the optical signal into a digital baseband signal.

It should be understood that a combination structure of the communication interface 703 and the optical module may also be referred to as a transceiver unit, a transceiver, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitting circuit, or the like.

In addition, the processor 701 is mainly configured to process a communication protocol and communication data, control an entire network device, execute a software program, and process data of the software program, for example, configured to support the communication apparatus 70 in performing an action described in the foregoing embodiments. The communication apparatus 70 may include a baseband processor and a central processing unit. The baseband processor is mainly configured to process the communication protocol and the communication data. The central processing unit is mainly configured to control the entire communication apparatus 70, execute the software program, and process the data of the software program. Functions of the baseband processor and the central processing unit may be integrated into the processor 701 in FIG. 7. A person skilled in the art may understand that the baseband processor and the central processing unit each may be an independent processor, and are interconnected by using a technology like a bus. A person skilled in the art may understand that the communication apparatus 70 may include a plurality of baseband processors to adapt to different network standards, the communication apparatus 70 may include a plurality of central processing units to enhance a processing capability of the communication apparatus 70, and components of the communication apparatus 70 may be connected through various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the memory in a form of a software program, and the processor executes the software program to implement a baseband processing function.

Specifically, the communication apparatus 70 performs the following steps based on the program code stored in the memory 702.

The processor 701 is configured to obtain data carried by each of a plurality of types of physical channels, where the plurality of types of physical channels are located in one time-domain unit; and then, the processor 701 separately encapsulates, into at least two packets, data carried by the plurality of types of physical channels, where data carried by at least one type of physical channel is encapsulated in each packet. Then, the processor 701 sends the packet to a wireless device in the time-domain unit through a fronthaul interface.

In this embodiment, the communication apparatus 70 can encapsulate data in one time-domain unit into at least two packets based on a dimension of a physical channel. Compared with the solution in which the data in the time-domain unit is encapsulated into one packet, a size of each packet is reduced. Therefore, a bandwidth required for transmitting each packet is also reduced. Therefore, a bandwidth requirement for packet transmission through the fronthaul interface is reduced.

In a possible implementation, data carried by different types of physical channels is encapsulated in different packets. Specifically, if the data carried by the at least one type of physical channel in the time-domain unit is encapsulated in each packet, a channel that carries data encapsulated in one of the at least two packets is different from a channel that carries data encapsulated in the another packet. For example, the at least two packets include a first packet and a second packet. Data carried by a first physical channel in a first time-domain unit is encapsulated in the first packet, and data carried by a second physical channel in the first time-domain unit is encapsulated in the second packet, where the first physical channel and the second physical channel are channels of different types. For example, the at least two packets include a first packet and a second packet, where data carried by a physical downlink control channel PDCCH is encapsulated in the first packet, and data carried by a physical downlink shared channel PDSCH is encapsulated in the second packet, where the PDCCH and the PDSCH are located in one time-domain unit.

In a possible implementation, data carried by one type of physical channel is encapsulated in at least one packet.

In a possible implementation, each packet carries frequency domain position indication information, and the frequency domain position indication information indicates a frequency domain position of a physical channel that carries data in the packet.

In a possible implementation, the time-domain unit is any one of a symbol, a slot, a subframe, or a transmission time interval TTI.

In a possible implementation, the plurality of types of physical channels include at least two types of channels of a physical downlink shared channel PDSCH, a physical downlink control channel PDCCH, a physical broadcast channel PBCH, a physical multicast channel PMCH, a physical control format indicator channel PCFICH, and a physical HARQ indicator channel PHICH.

In a possible implementation, when a plurality of types of physical channels located in one time-domain unit are N types of physical channels, the processor 701 encapsulates data carried by the N types of physical channels into N packets, where only data carried by one type of physical channel is encapsulated in each packet, and N is an integer greater than 1.

In a possible implementation, when a plurality of types of physical channels located in one time-domain unit are N types of physical channels, the processor 701 encapsulates, into one packet, data carried by at least two types of physical channels of the N types of physical channels, to obtain M packets. Herein, N is an integer greater than 1, M is an integer greater than 1, and M is less than N.

In a possible implementation, the processor 701 determines a priority of each packet based on a physical channel that carries data in each packet and the first correspondence; and controls the communication interface 703 to send at least one of the at least two packets to the wireless device in the time-domain unit based on the priority of each packet.

In a possible implementation, the processor 701 determines, based on the priority of each packet, a sequence of sending the at least two packets, where a sequence of sending a high-priority packet is prior to a sequence of sending a low-priority packet; and controls the communication interface 703 to send the at least two packets to the wireless device in the time-domain unit based on the sequence.

In a possible implementation, when the priority of the packet is higher than a preset priority, the processor 701 controls the communication interface 703 to send the packet in the time-domain unit. When the priority of the packet is lower than the preset priority, the processor 701 temporarily stores or discards the packet.

For example, the at least two packets include a first packet and a second packet, data carried by a physical downlink control channel PDCCH is encapsulated in the first packet, and data carried by a physical downlink shared channel PDSCH is encapsulated in the second packet. The physical downlink control channel PDCCH and the physical downlink shared channel PDSCH are located in one time-domain unit. A priority of the first packet is higher than a priority of the second packet.

The processor 701 controls the communication interface 703 to first send the first packet and then send the second packet in the time-domain unit.

In a possible implementation, the at least two packets include a third packet, and data carried by a physical downlink shared channel PDSCH and data carried by a physical downlink control channel PDCCH are encapsulated in the third packet.

In a possible implementation, each packet includes first indication information, and the first indication information indicates a priority of processing the packet.

For the rest, refer to the method of the wireless device controller in the embodiment corresponding to FIG. 2. Details are not described herein again.

As shown in FIG. 8, this application further provides another communication apparatus 80. The communication apparatus 80 may be the wireless device controller or a chip in the wireless device controller in the embodiment corresponding to FIG. 2. The communication apparatus 80 includes an obtaining module 801, a packet encapsulating module 802, and a transmission module 803.

The obtaining module 801 is configured to obtain data carried by each of a plurality of types of physical channels, where the plurality of types of physical channels are located in one time-domain unit.

The packet encapsulating module 802 is configured to separately encapsulate, into at least two packets, data carried by the plurality of types of physical channels, where data carried by at least one type of physical channel is encapsulated in each packet.

The transmission module 803 is configured to send the packet to the wireless device in the time-domain unit through the fronthaul interface.

In a possible implementation, data carried by different types of physical channels is encapsulated in different packets.

In a possible implementation, data carried by one type of physical channel is encapsulated in at least one packet.

In a possible implementation, each packet carries frequency domain position indication information, and the frequency domain position indication information indicates a frequency domain position of a physical channel that carries data in the packet.

In a possible implementation, the time-domain unit is any one of a symbol, a slot, a subframe, or a transmission time interval TTI.

In a possible implementation, the plurality of types of physical channels include at least two types of channels of a physical downlink shared channel PDSCH, a physical downlink control channel PDCCH, a physical broadcast channel PBCH, a physical multicast channel PMCH, a physical control format indicator channel PCFICH, and a physical HARQ indicator channel PHICH.

In a possible implementation, the plurality of types of physical channels located in the one time-domain unit are N types of physical channels, and N is an integer greater than 1. The packet encapsulating module 802 is specifically configured to encapsulate, into N packets, data carried by the N types of physical channels, where only data carried by one type of physical channel is encapsulated in each packet.

In a possible implementation, the plurality of types of physical channels located in the one time-domain unit are N types of physical channels, and N is an integer greater than 1. The packet encapsulating module 802 is specifically configured to encapsulate, into one packet, data carried by at least two types of physical channels in the N types of physical channels, to obtain M packets, where M is an integer greater than 1, and M is less than N.

In a possible implementation, the wireless device controller stores a first correspondence, the first correspondence is a correspondence between a physical channel and a priority, and the priority indicates a priority degree of sending, by the wireless device controller, a packet carrying data carried by the physical channel.

In a possible implementation, the transmission module 803 is specifically configured to: determine a priority of each packet based on a physical channel carrying data in each packet and the first correspondence, and send at least one packet of the at least two packets to the wireless device in the time-domain unit based on the priority of each packet through the fronthaul interface.

In a possible implementation, the transmission module 803 is specifically configured to: determine, based on the priority of each packet, a sequence of sending the at least two packets, where a sequence of sending a high-priority packet is prior to a sequence of sending a low-priority packet; and send the at least two packets to the wireless device in the time-domain unit based on the sequence through the fronthaul interface.

In a possible implementation, the transmission module 803 is specifically configured to:
when a priority of the packet is higher than a preset priority, send the packet in the time-domain unit through the fronthaul interface; or
when a priority of the packet is lower than a preset priority, temporarily store or discard the packet.

In a possible implementation, the at least two packets include a first packet and a second packet, data carried by a physical downlink control channel PDCCH is encapsulated in the first packet, and data carried by a physical downlink shared channel PDSCH is encapsulated in the second packet. The physical downlink control channel PDCCH and the physical downlink shared channel PDSCH are located in one time-domain unit. A priority of the first packet is higher than a priority of the second packet.

The transmission module 803 is specifically configured to first send the first packet in the time-domain unit through the fronthaul interface, and then, send the second packet through the fronthaul interface.

In a possible implementation, the at least two packets include a third packet, and data carried by a physical downlink shared channel PDSCH and data carried by a physical downlink control channel PDCCH are encapsulated in the third packet.

In a possible implementation, each packet includes first indication information, and the first indication information indicates a priority of processing the packet.

For the rest, refer to the method of the wireless device controller in the embodiment corresponding to FIG. 2. Details are not described herein again.

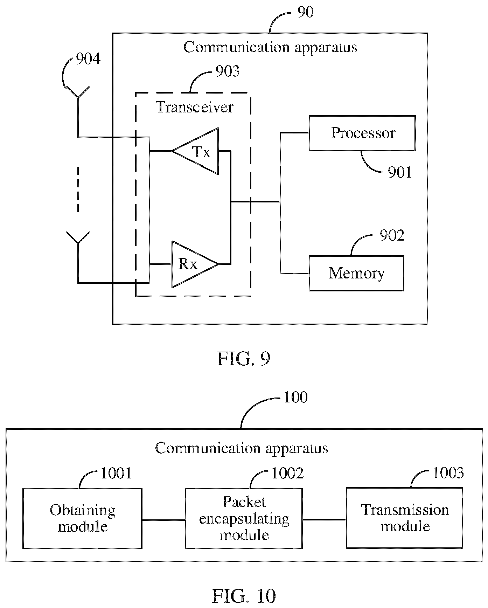

FIG. 9 is a schematic diagram of a structure of another communication apparatus 90 according to this application. It should be understood that the wireless device in the method embodiment corresponding to FIG. 4 or FIG. 6 may be based on the structure of the communication apparatus 90 shown in FIG. 9 in this embodiment. It should be understood that the communication apparatus 90 may be a radio unit (radio unit, RU) (also referred to as a radio frequency unit) in a radio access network RAN device (for example, a base station), or may be another processing apparatus having a function of processing a radio signal (for example, an intermediate frequency signal or a radio frequency signal). For example, the communication apparatus 90 may be a remote radio unit (remote radio unit, RRU) (also referred to as a remote radio module) or a remote radio head (remote radio head, RRH) in a base station. The RRU is generally used for conventional outdoor coverage of a macro base station, and the RRH is generally used for indoor coverage of an indoor distributed system. For example, in a 5G NR system, the communication apparatus 90 may alternatively be an active antenna unit (active antenna unit, AAU), namely, a processing unit that integrates an RRU (or an RRH) and an antenna. In an actual application and subsequent network evolution, the wireless device may alternatively be another device or apparatus that has a function of receiving and sending a radio frequency signal, and processing a radio frequency signal or an intermediate frequency signal.

The communication apparatus 90 includes at least one processor 901, at least one memory 902, at least one transceiver 903, and one or more antennas 904. The processor 901, the memory 902, and the transceiver 903 are connected to each other by using a connection apparatus, and the antenna 904 is connected to the transceiver 903. The connection apparatus may include various types of interfaces, transmission cables, buses, or the like. This is not limited in this embodiment.

The memory 902 is mainly configured to store a software program and data. The memory 902 may exist independently, and is connected to the processor 901. Optionally, the memory 902 and the processor 901 may be integrated, for example, integrated into one or more chips. The memory 902 can store program code for execution the technical solutions in embodiments of this application, and the processor 901 controls the execution. Various types of executed computer program code may also be considered as drivers of the processor 901. It should be understood that FIG. 9 in this embodiment shows only one memory and one processor. However, in an actual application, the communication apparatus 90 may include a plurality of processor or a plurality of memory. This is not specifically limited herein. In addition, the memory 902 may also be referred to as a storage medium, a storage device, or the like. The memory 902 may be a storage element located on a same chip as the processor (namely, an on-chip storage element), or an independent storage element. This is not limited in embodiments of this application.

In this embodiment, the transceiver 903 may be configured to support receiving or sending of a radio frequency signal between the communication apparatus 90 and a terminal device, and the transceiver 903 may be connected to the antenna 904. The transceiver 903 includes a transmitter Tx and a receiver Rx. Specifically, the one or more antennas 904 may receive a radio frequency signal. The receiver Rx of the transceiver 903 is configured to receive the radio frequency signal from the antenna 904, and convert the radio frequency signal into a digital baseband signal or a digital intermediate frequency signal. In this way, the digital baseband signal or the digital intermediate frequency signal is transmitted to a wireless device controller, so that the wireless device controller performs further processing, for example, demodulation processing and decoding processing, on the digital baseband signal or the digital intermediate frequency signal. In addition, the transmitter Tx in the transceiver 903 is further configured to receive a modulated digital baseband signal or a modulated digital intermediate frequency signal from the wireless device controller, convert the modulated digital baseband signal or the modulated digital intermediate frequency signal into a radio frequency signal, and send the radio frequency signal through one or more antennas 904. Specifically, the receiver Rx may selectively perform one-level or multi-level down frequency mixing processing and analog-to-digital conversion processing on the radio frequency signal to obtain a digital baseband signal or a digital intermediate frequency signal, and a sequence of down frequency mixing processing and analog-to-digital conversion processing is adjustable. The transmitter Tx may selectively perform one-level or multi-level up frequency mixing processing and digital-to-analog conversion processing on the modulated digital baseband signal or the modulated digital intermediate frequency signal, to obtain the radio frequency signal. A sequence of up frequency mixing processing and digital-to-analog conversion processing is adjustable. The digital baseband signal and the digital intermediate frequency signal may be collectively referred to as a digital signal.

It should be understood that the transceiver 903 may also be referred to as a transceiver unit, a transceiver, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitting circuit, or the like.

In addition, the processor 901 is mainly configured to process a communication protocol and communication data, execute a software program, and process data of the software program, for example, configured to support the communication apparatus 90 in performing an action described in the foregoing embodiments. In a possible implementation, the communication apparatus 90 is configured to perform the method in the embodiment corresponding to FIG. 4 or FIG. 6.

Specifically, when the communication apparatus 90 performs the method in the embodiment corresponding to FIG. 4, the processor 901 in the communication apparatus 90 is configured to: obtain data carried by each of a plurality of types of physical channels located in one time-domain unit, and separately encapsulate data carried by the plurality of types of physical channels into at least two packets, where data carried by at least one type of physical channel is encapsulated in each packet. Then, the communication apparatus 90 controls the transceiver 903 to send the packet to the wireless device in the time-domain unit through a fronthaul interface.

In this embodiment, the communication apparatus 90 can encapsulate data in one time-domain unit into at least two packets based on a dimension of a physical channel. Compared with the solution in which the data in the time-domain unit is encapsulated into one packet, a size of each packet is reduced. Therefore, a bandwidth required for transmitting each packet is also reduced. Therefore, a bandwidth requirement for packet transmission through the fronthaul interface is reduced.

In a possible implementation, data carried by different types of physical channels is encapsulated in different packets.

In a possible implementation, data carried by one type of physical channel is encapsulated in at least one packet.

In a possible implementation, each packet carries frequency domain position indication information, and the frequency domain position indication information indicates a frequency domain position of a physical channel that carries data in the packet.

In a possible implementation, the time-domain unit is any one of a symbol, a slot, a subframe, or a transmission time interval TTI.

In a possible implementation, the plurality of types of physical channels include at least two types of channels of a physical uplink shared channel PUSCH, a physical uplink control channel PUCCH, and a physical random access channel PRACH.

In a possible implementation, the plurality of types of physical channels located in the one time-domain unit are N types of physical channels, and N is an integer greater than 1. The processor 901 is configured to encapsulate, into N packets, data carried by the N types of physical channels, where only data carried by one type of physical channel is encapsulated in each packet.

In a possible implementation, the plurality of types of physical channels located in the one time-domain unit are N types of physical channels, and N is an integer greater than 1. The processor 901 is configured to encapsulate, into one packet, data carried by at least two types of physical channels in the N types of physical channels, to obtain M packets, where M is an integer greater than 1, and M is less than N.

In a possible implementation, the wireless device stores a first correspondence, the first correspondence is a correspondence between a physical channel and a priority, and the priority indicates a priority degree of sending, by the wireless device, a packet carrying data carried by the physical channel.

In a possible implementation, the processor 901 determines a priority of each packet based on a physical channel that carries data in each packet and the first correspondence; and the processor 901 controls the transceiver 903 to send at least one of the at least two packets to the wireless device in the time-domain unit based on the priority of each packet through the fronthaul interface.

In a possible implementation, the processor 901 determines, based on the priority of each packet, a sequence of sending the at least two packets, where a sequence of sending a high-priority packet is prior to a sequence of sending a low-priority packet; and the processor 901 controls the transceiver 903 to send the at least two packets to the wireless device in the time-domain unit based on the sequence through the fronthaul interface.

In a possible implementation, when a priority of the packet is higher than a preset priority, the processor 901 controls the transceiver 903 to send the packet in the time-domain unit through the fronthaul interface. When the priority of the packet is lower than the preset priority, the processor 901 temporarily stores or discards the packet.

In a possible implementation, each packet includes second indication information, and the second indication information indicates a priority of processing the packet.

Specifically, when the communication apparatus 90 performs the method in the embodiment corresponding to FIG. 6, the processor 901 of the communication apparatus 90 obtains data received by a plurality of physical antennas, to obtain data corresponding to the plurality of physical antennas; and separately encapsulates the data corresponding to the plurality of physical antennas into at least two packets, where data corresponding to at least one physical antenna is encapsulated in each packet, and data corresponding to different physical antennas is encapsulated in different packets. In addition, the processor 901 controls the transceiver 903 to send the packet to the wireless device controller through the fronthaul interface.

In this embodiment, the communication apparatus 90 can encapsulate data of a plurality of physical antennas into at least two packets at a granularity of a physical antenna. Compared with the solution in which the data of the plurality of physical antennas is encapsulated in one packet, a size of each packet is reduced. Therefore, a bandwidth required for transmitting each packet is also reduced. Therefore, a bandwidth requirement for packet transmission through the fronthaul interface is reduced.

In a possible implementation, data corresponding to one physical antenna is encapsulated in at least one packet.

In a possible implementation, the wireless device stores a first mapping table, the first mapping table includes N logical antennas of the wireless device and a plurality of physical antennas corresponding to each logical antenna, and N is an integer greater than 1.

The processor 901 of the communication apparatus 90 selects, based on the first mapping table, one physical antenna from the plurality of physical antennas corresponding to each logical antenna, to obtain N physical antennas; and encapsulates data corresponding to the N physical antennas into one first packet, and encapsulates data of another physical antenna of the wireless device into at least one second packet, to obtain the at least two packets. Optionally, a priority of the first packet is higher than a priority of the second packet.

In a possible implementation, each packet includes third indication information, and the third indication information indicates a priority of processing the packet.

In a possible implementation, the processor 901 controls the transceiver 903 to send at least one packet of the at least two packets to the wireless device controller based on the priority of each packet through the fronthaul interface.

In a possible implementation, the processor 901 determines, based on the priority of each packet, a sequence of sending the at least two packets, where a sequence of sending a high-priority packet is prior to a sequence of sending a low-priority packet; and the processor 901 controls the transceiver 903 to send the at least two packets to the wireless device controller based on the sequence.

In a possible implementation, the transmission module is specifically configured to:
when the priority of the packet is higher than a preset priority, control, by the processor 901, the transceiver 903 to send the packet through the fronthaul interface; or
when the priority of the packet is lower than a preset priority, control, by the processor 901, the transceiver 903 to temporarily store or discard the packet.

For the rest, refer to the method of the wireless device in the embodiment corresponding to FIG. 4 or FIG. 6. Details are not described herein again.

As shown in FIG. 10, this application further provides another communication apparatus 100. The communication apparatus 100 may be the wireless device or a chip in the wireless device in the embodiment corresponding to FIG. 4 or FIG. 6. The communication apparatus 100 includes an obtaining module 1001, a packet encapsulating module 1002, and a transmission module 1003.

The obtaining module 1001 is configured to obtain data carried by each of a plurality of types of physical channels, where the plurality of types of physical channels are located in one time-domain unit.

The packet encapsulating module 1002 is configured to separately encapsulate, into at least two packets, data carried by the plurality of types of physical channels, where data carried by at least one type of physical channel is encapsulated in each packet.

The transmission module 1003 is configured to send the packet to the wireless device in the time-domain unit through a fronthaul interface.

In a possible implementation, data carried by different types of physical channels is encapsulated in different packets.

In a possible implementation, data carried by one type of physical channel is encapsulated in at least one packet.

In a possible implementation, each packet carries frequency domain position indication information, and the frequency domain position indication information indicates a frequency domain position of a physical channel that carries data in the packet.

In a possible implementation, the time-domain unit is any one of a symbol, a slot, a subframe, or a transmission time interval TTI.

In a possible implementation, the plurality of types of physical channels include at least two types of channels of a physical downlink shared channel PDSCH, a physical downlink control channel PDCCH, a physical broadcast channel PBCH, a physical multicast channel PMCH, a physical control format indicator channel PCFICH, and a physical HARQ indicator channel PHICH.

In a possible implementation, the plurality of types of physical channels located in the one time-domain unit are N types of physical channels, and N is an integer greater than 1. The packet encapsulating module 1002 is specifically configured to encapsulate, into N packets, data carried by the N types of physical channels, where only data carried by one type of physical channel is encapsulated in each packet.

In a possible implementation, the plurality of types of physical channels located in the one time-domain unit are N types of physical channels, and N is an integer greater than 1. The packet encapsulating module 1002 is specifically configured to encapsulate, into one packet, data carried by at least two types of physical channels in the N types of physical channels, to obtain M packets, where M is an integer greater than 1, and M is less than N.

In a possible implementation, a wireless device controller stores a first correspondence, the first correspondence is a correspondence between a physical channel and a priority, and the priority indicates a priority degree of sending, by the wireless device controller, a packet carrying data carried by the physical channel.

In a possible implementation, the transmission module 1003 is specifically configured to: determine a priority of each packet based on a physical channel carrying data in each packet and the first correspondence, and send at least one packet of the at least two packets to the wireless device in the time-domain unit based on the priority of each packet through the fronthaul interface.

In a possible implementation, the transmission module 1003 is specifically configured to: determine, based on the priority of each packet, a sequence of sending the at least two packets, where a sequence of sending a high-priority packet is prior to a sequence of sending a low-priority packet; and send the at least two packets to the wireless device in the time-domain unit based on the sequence through the fronthaul interface.

In a possible implementation, the transmission module 1003 is specifically configured to:
when a priority of the packet is higher than a preset priority, send the packet in the time-domain unit through the fronthaul interface; or
when a priority of the packet is lower than a preset priority, temporarily store or discard the packet.

In a possible implementation, the at least two packets include a first packet and a second packet, data carried by a physical downlink control channel PDCCH is encapsulated in the first packet, and data carried by a physical downlink shared channel PDSCH is encapsulated in the second packet. The physical downlink control channel PDCCH and the physical downlink shared channel PDSCH are located in one time-domain unit. A priority of the first packet is higher than a priority of the second packet.

The transmission module 1003 is specifically configured to first send the first packet in the time-domain unit through the fronthaul interface, and then, send the second packet through the fronthaul interface.

In a possible implementation, the at least two packets include a third packet, and data carried by a physical downlink shared channel PDSCH and data carried by a physical downlink control channel PDCCH are encapsulated in the third packet.

In a possible implementation, each packet includes first indication information, and the first indication information indicates a priority of processing the packet.

For the rest, refer to the method of the wireless device in the embodiment corresponding to FIG. 4 or FIG. 6. Details are not described herein again.

In an implementation process, steps in the method can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in a memory, and a processor reads information in the memory and completes the steps in the method in combination with hardware of the processor. To avoid repetition, details are not described herein again. It should be further understood that, "first", "second", "third", "fourth", and various numbers in this specification are merely used for differentiation for ease of description, and are not intended to limit the scope of embodiments of this application.

In addition, this application provides a computer program product. The computer program product includes one or more computer instructions. When the computer program instructions are loaded and executed on a computer, the procedure or functions according to embodiments of this application are all or partially generated. For example, the method related to the wireless device controller in FIG. 2 is implemented. For another example, the method related to the wireless device in FIG. 4 or FIG. 6 is implemented. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD) (also referred to as a solid state drive)), or the like.

In addition, this application further provides a computer-readable storage medium. The storage medium stores a computer program, and the computer program is executed by a processor to implement the method related to the wireless device controller in FIG. 2.

In addition, this application further provides a computer-readable storage medium. The storage medium stores a computer program, and the computer program is executed by a processor to implement the method related to the wireless device in FIG. 4 or FIG. 6.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

## Claims

1. A data transmission method, comprising:
obtaining, by a wireless device controller, data carried by each of a plurality of types of physical channels, wherein the plurality of types of physical channels are located in one time-domain unit;
separately encapsulating, into at least two packets by the wireless device controller, data carried by the plurality of types of physical channels, wherein data carried by at least one type of physical channel is encapsulated in each packet; and
sending, by the wireless device controller, the packet to a wireless device in the time-domain unit through a fronthaul interface.

2. The method according to claim 1, wherein data carried by different types of physical channels is encapsulated in different packets.

3. The method according to claim 1 or 2, wherein data carried by one type of physical channel is encapsulated in at least one packet.

4. The method according to any one of claims 1 to 3, wherein each packet carries frequency domain position indication information, and the frequency domain position indication information indicates a frequency domain position of a physical channel that carries data in the packet.

5. The method according to any one of claims 1 to 4, wherein the time-domain unit is any one of a symbol, a slot, a subframe, or a transmission time interval TTI.

6. The method according to any one of claims 1 to 5, wherein the plurality of types of physical channels located in the one time-domain unit are N types of physical channels, and N is an integer greater than 1; and
the separately encapsulating, into at least two packets by the wireless device controller, data carried by the plurality of types of physical channels comprises:
encapsulating, into N packets by the wireless device controller, the data carried by the N types of physical channels, wherein only data carried by one type of physical channel is encapsulated in each packet.

7. The method according to any one of claims 1 to 5, wherein the plurality of types of physical channels located in the one time-domain unit are N types of physical channels, and N is an integer greater than 1; and
the separately encapsulating, into at least two packets by the wireless device controller, data carried by the plurality of types of physical channels comprises:
encapsulating, into one packet by the wireless device controller, data carried by at least two types of physical channels in the N types of physical channels, to obtain M packets, wherein M is an integer greater than 1, and M is less than N.

8. The method according to any one of claims 1 to 7, wherein the wireless device controller stores a first correspondence, the first correspondence is a correspondence between a physical channel and a priority, and the priority indicates a priority degree of sending, by the wireless device controller, a packet carrying data carried by the physical channel.

9. The method according to claim 8, wherein the sending, by the wireless device controller, the packet to a wireless device in the time-domain unit through a fronthaul interface comprises:
determining, by the wireless device controller, a priority of each packet based on a physical channel carrying data in each packet and the first correspondence; and
sending, by the wireless device controller, at least one packet of the at least two packets to the wireless device in the time-domain unit based on the priority of each packet through the fronthaul interface.

10. The method according to claim 9, wherein the sending, by the wireless device controller, at least one packet of the at least two packets to the wireless device in the time-domain unit based on the priority of each packet through the fronthaul interface comprises:
determining, by the wireless device controller based on the priority of each packet, a sequence of sending the at least two packets, wherein a sequence of sending a high-priority packet is prior to a sequence of sending a low-priority packet; and
sending, by the wireless device controller, the at least two packets to the wireless device in the time-domain unit based on the sequence through the fronthaul interface.

11. The method according to claim 9, wherein the sending, by the wireless device controller, at least one packet of the at least two packets to the wireless device in the time-domain unit based on the priority of each packet through the fronthaul interface comprises:
when a priority of the packet is higher than a preset priority, sending, by the wireless device controller, the packet in the time-domain unit through the fronthaul interface; or
when a priority of the packet is lower than a preset priority, temporarily storing or discarding, by the wireless device controller, the packet.

12. The method according to any one of claims 1 to 11, wherein the plurality of types of physical channels comprise at least two types of channels of a physical downlink shared channel PDSCH, a physical downlink control channel PDCCH, a physical broadcast channel PBCH, a physical multicast channel PMCH, a physical control format indicator channel PCFICH, and a physical HARQ indicator channel PHICH.

13. The method according to claim 9, wherein the at least two packets comprise a first packet and a second packet, data carried by a physical downlink control channel PDCCH is encapsulated in the first packet, data carried by a physical downlink shared channel PDSCH is encapsulated in the second packet, the physical downlink control channel PDCCH and the physical downlink shared channel PDSCH are located in one time-domain unit, and a priority of the first packet is higher than a priority of the second packet; and
the sending, by the wireless device controller, at least one packet of the at least two packets to the wireless device in the time-domain unit based on the priority of each packet through the fronthaul interface comprises:
first sending, by the wireless device controller, the first packet in the time-domain unit through the fronthaul interface, and then, sending the second packet through the fronthaul interface.

14. The method according to claim 9, wherein the at least two packets comprise a third packet, and data carried by a physical downlink shared channel PDSCH and data carried by a physical downlink control channel PDCCH are encapsulated in the third packet.

15. The method according to any one of claims 1 to 14, wherein each packet comprises first indication information, and the first indication information indicates a priority of processing the packet.

16. A data transmission method, comprising:
obtaining, by a wireless device, data carried by each of a plurality of types of physical channels, wherein the plurality of types of physical channels are located in one time-domain unit;
separately encapsulating, into at least two packets by the wireless device, data carried by the plurality of types of physical channels, wherein data carried by at least one type of physical channel is encapsulated in each packet; and
sending, by the wireless device, the packet to a wireless device controller in the time-domain unit through a fronthaul interface.

17. The method according to claim 16, wherein data carried by different types of physical channels is encapsulated in different packets.

18. The method according to claim 16 or 17, wherein data carried by one type of physical channel is encapsulated in at least one packet.

19. The method according to any one of claims 16 to 18, wherein each packet carries frequency domain position indication information, and the frequency domain position indication information indicates a frequency domain position of a physical channel that carries data in the packet.

20. The method according to any one of claims 16 to 19, wherein the time-domain unit is any one of a symbol, a slot, a subframe, or a transmission time interval TTI.

21. The method according to any one of claims 16 to 20, wherein the plurality of types of physical channels located in the one time-domain unit are N types of physical channels, and N is an integer greater than 1; and
the separately encapsulating, into at least two packets by the wireless device, data carried by the plurality of types of physical channels comprises:
encapsulating, into N packets by the wireless device, the data carried by the N types of physical channels, wherein only data carried by one type of physical channel is encapsulated in each packet.

22. The method according to any one of claims 16 to 20, wherein the plurality of types of physical channels located in the one time-domain unit are N types of physical channels, and N is an integer greater than 1; and
the separately encapsulating, into at least two packets by the wireless device, data carried by the plurality of types of physical channels comprises:
encapsulating, into one packet by the wireless device, data carried by at least two types of physical channels in the N types of physical channels, to obtain M packets, wherein M is an integer greater than 1, and M is less than N.

23. The method according to any one of claims 16 to 22, wherein the wireless device stores a second correspondence, the second correspondence is a correspondence between a physical channel and a priority, and the priority indicates a priority degree of sending, by the wireless device, a packet carrying data carried by the physical channel.

24. The method according to claim 23, wherein the sending, by the wireless device, the packet to a wireless device controller in the time-domain unit through a fronthaul interface comprises:
determining, by the wireless device, a priority of each packet based on a physical channel carrying data in each packet and the second correspondence; and
sending, by the wireless device, at least one packet of the at least two packets to the wireless device controller in the time-domain unit based on the priority of each packet through the fronthaul interface.

25. The method according to claim 24, wherein the sending, by the wireless device, at least one packet of the at least two packets to the wireless device controller in the time-domain unit based on the priority of each packet through the fronthaul interface comprises:
determining, by the wireless device based on the priority of each packet, a sequence of sending the at least two packets, wherein a sequence of sending a high-priority packet is prior to a sequence of sending a low-priority packet; and
sending, by the wireless device, the at least two packets to the wireless device controller in the time-domain unit based on the sequence through the fronthaul interface.

26. The method according to claim 24, wherein the sending, by the wireless device, at least one packet of the at least two packets to the wireless device controller in the time-domain unit based on the priority of each packet through the fronthaul interface comprises:
when a priority of the packet is higher than a preset priority, sending, by the wireless device, the packet in the time-domain unit through the fronthaul interface; or
when a priority of the packet is lower than a preset priority, temporarily storing or discarding, by the wireless device, the packet.

27. The method according to any one of claims 16 to 26, wherein the plurality of types of physical channels comprise at least two types of channels of a physical uplink shared channel PUSCH, a physical uplink control channel PUCCH, and a physical random access channel PRACH.

28. The method according to any one of claims 16 to 27, wherein each packet comprises second indication information, and the second indication information indicates a priority of processing the packet.

29. A data transmission method, comprising:
obtaining, by a wireless device, data received by a plurality of physical antennas, to obtain data corresponding to the plurality of physical antennas;
separately encapsulating, by the wireless device, the data corresponding to the plurality of physical antennas into at least two packets, wherein data corresponding to at least one physical antenna is encapsulated in each packet, and data corresponding to different physical antennas is encapsulated in different packets; and
sending, by the wireless device, the packet to a wireless device controller through a fronthaul interface.

30. The method according to claim 29, wherein data corresponding to one physical antenna is encapsulated in at least one packet.

31. The method according to claim 29 or 30, wherein the wireless device stores a first mapping table, the first mapping table comprises N logical antennas of the wireless device and a plurality of physical antennas corresponding to each logical antenna, and N is an integer greater than 1; and
the separately encapsulating, by the wireless device, the data corresponding to the plurality of physical antennas into at least two packets comprises:
selecting, by the wireless device based on the first mapping table, one physical antenna from the plurality of physical antennas corresponding to each logical antenna, to obtain N physical antennas; and
encapsulating, by the wireless device, data corresponding to the N physical antennas into one first packet, and encapsulating, by the wireless device, data of another physical antenna of the wireless device into at least one second packet, to obtain the at least two packets.

32. The method according to claim 31, wherein a priority of the first packet is higher than a priority of the second packet.

33. The method according to any one of claims 29 to 31, wherein each packet comprises third indication information, and the third indication information indicates a priority of processing the packet.

34. The method according to claim 33, wherein the sending, by the wireless device, the packet to a wireless device controller through a fronthaul interface comprises:
sending, by the wireless device, at least one packet of the at least two packets to the wireless device controller based on the priority of each packet through the fronthaul interface.

35. The method according to claim 34, wherein the sending, by the wireless device, at least one packet of the at least two packets to the wireless device controller based on the priority of each packet through the fronthaul interface comprises:
determining, by the wireless device based on the priority of each packet, a sequence of sending the at least two packets, wherein a sequence of sending a high-priority packet is prior to a sequence of sending a low-priority packet; and
sending, by the wireless device, the at least two packets to the wireless device controller based on the sequence.

36. The method according to claim 34, wherein the sending, by the wireless device, at least one packet of the at least two packets to the wireless device controller based on the priority of each packet through the fronthaul interface comprises:
when a priority of the packet is higher than a preset priority, sending, by the wireless device, the packet through the fronthaul interface; or
when a priority of the packet is lower than a preset priority, temporarily storing or discarding, by the wireless device, the packet.

37. A communication apparatus, comprising a processor and a memory, wherein
the memory stores a computer program; and
the processor invokes the computer program, so that the communication apparatus performs the method according to any one of claims 1 to 15.

38. A communication apparatus, comprising a processor and a memory, wherein
the memory stores a computer program; and
the processor invokes the computer program, so that the communication apparatus performs the method according to any one of claims 16 to 28, or performs the method according to any one of claims 29 to 36.

39. A communication system, comprising:
a communication apparatus that performs the method according to any one of claims 1 to 15, and a communication apparatus that performs the method according to any one of claims 16 to 28; or
a communication apparatus that performs the method according to any one of claims 1 to 15, and a communication apparatus that performs the method according to any one of claims 29 to 36.

40. A computer-readable storage medium, storing instructions, wherein when the instructions are run on a computer, the computer is enabled to perform the method according to any one of claims 1 to 15, perform the method according to any one of claims 16 to 28, or perform the method according to any one of claims 29 to 36.

41. A computer program product comprising instructions, wherein when the instructions are run on a computer, the computer is enabled to perform the method according to any one of claims 1 to 15, perform the method according to any one of claims 16 to 28, or perform the method according to any one of claims 29 to 36.
